(19) **Europäisches Patentamt**

**European Patent Office**

**Office européen des brevets**

(11) **EP 0 901 122 B1**

(12) **EUROPEAN PATENT SPECIFICATION**

(45) Date of publication and mention
of the grant of the patent:
**14.06.2006 Bulletin 2006/24**

(51) Int Cl.:
*G11B 20/00* (2006.01)  *G11B 20/18* (2006.01)

(21) Application number: **98116739.8**

(22) Date of filing: **03.09.1998**

(54) **Information generating method and apparatus, information reproducing method and apparatus, and information record medium**

Informationserzeugungs- und -wiedergabeverfahren und -gerät sowie
Informationsaufzeichnungsmedium

Méthode et appareil de génération d'information, méthode et appareil de reproduction d'information,
et milieu d'enregistrement d'information

(84) Designated Contracting States:
**DE FR GB**

(30) Priority: **05.09.1997 JP 24149897**
**16.09.1997 JP 25098697**

(43) Date of publication of application:
**10.03.1999 Bulletin 1999/10**

(73) Proprietor: **PIONEER ELECTRONIC**
**CORPORATION**
**Meguro-ku**
**Tokyo-to (JP)**

(72) Inventor: **Kuroda, Kazuo**
**c/o Pionieer Elictronic Corp.**
**Tokorozawa-shi**
**Saitama-ken (JP)**

(74) Representative: **Skuhra, Udo**
**Reinhard-Skuhra-Weise & Partner**
**Patentanwälte**
**Postfach 44 01 51**
**80750 München (DE)**

(56) References cited:
**EP-A- 0 704 844       EP-A- 0 716 544**
**EP-A- 0 756 279       EP-A- 0 756 385**
**US-A- 5 574 787       US-A- 5 592 454**
**US-A- 5 930 367**

- PATENT ABSTRACTS OF JAPAN vol. 097, no.
  009, 30 September 1997 (1997-09-30) & JP 09
  128890 A (SONY CORP), 16 May 1997 (1997-05-16)
- PATENT ABSTRACTS OF JAPAN vol. 096, no.
  009, 30 September 1996 (1996-09-30) & JP 08
  129828 A (SONY DISC TECHNOL:KK), 21 May
  1996 (1996-05-21)

**Description**

BACKGROUND OF THE INVENTION

1. Field of the Invention

The present invention relates to an information generating apparatus, an information reproducing apparatus and an information record medium, which can protect that legally generated information is illegally copied and further illegally reproduced to be generally distributed.

2. Description of the Related Art

Video information such as a movie or the like and audio information such as a music or the like are protected by the copyrights in many cases. In these cases, it is basically prohibited to copy such information without a permission.

Moreover, an owner of the copyright needs to have a plan of effectively protecting the copy.

A method for applying to the video information or the like a modulation referred to as a "scramble" is typically employed as a method for protecting the illegal copy. This scramble modulation is amodulating method, the modulated information by which cannot be demodulated without special key data. Usually, the key data is recorded on a data record area in an optical disc or the like as record information (data to be recorded) together with the scramble-modulated video information, and then the optical disc or the like is sold.

By a user who buys the optical disc, only if the key data recorded in a reproducing device for the optical disc owned by the user coincides with the key data recorded together with the video information on the optical disc, the scramble-modulated video information can be demodulated in accordance wi th the key data to thereby reproduce the video information. At this time, as long as the user manages the key data to be unknown to other persons, even if only the scramble-modulated video information is illegally copied, this cannot be demodulated or reproduced.

However, in the above explained method for protecting the illegal copy, the key data is recorded on the data record area of the optical disc as the record information together with the scramble-modulated video information and the like. Thus, there may be a case in which the key data is illegally copied together wi th the video information and the like. This results in a problem that a person, who makes an illegal copy, may use the obtained key data to demodulate the scramble-modulated video information and the like so that he or she can view and hear it.

Moreover, in the above explained method for protecting the illegal copy, there is no technique to judge whether or not the video information or the like is legally distributed (i.e., whether or not the video information or the like is a so-called "original"). Hence, this results in a problem that even in a case of the illegally copied video information or the like, it is impossible to judge whether or not it is illegally copied.

US5,930,367 discloses an apparatus for processing digital data signals which may be used in recording/reproducing and transmitting/receiving of such signals. During recording or transmission, error correction codes are added to the digital signals and a portion of such error correction codes is replaced with other information. Such other information may provide an indication as whether the digital signals are original signals or a copy thereof. During reproduction or reception, the other information is extracted and utilized in a predetermined manner. For example, reproduced digital signals may or may not be outputted depending on whether the extracted information indicates that the digital signals are original signals or a copy thereof. As a result, unauthorized copying of signals may be discouraged or prevented. Furthermore, by replacing a portion of the error correction code with the other information, storage capacity for the digital signals and/or the rate for processing such signals may not be adversely affected.

SUMMARY OF THE INVENTION

The present invention is proposed in view of the above mentioned problems. It is therefore an object of the present invention to provide an information generating method and an information generating apparatus,an information reproducing method and an information reproducing apparatus and an information record medium, which can protect legally generated video information, audio information or the like from being illegally copied and further illegally reproduced.

The above object of the present invention can be achieved by an information generating method of generating output information to be outputted. The information generating method is provided with: adding an error correction code, which is used for an error correction of the output information when the output information is outputted, to the output information to thereby generate the output information having the error correction code: and replacing a part of the output information having the error correction code, which is generated by the adding process, with identification information indicating that the output information to be outputted is not illegally copied to thereby generate the partially replaced output information.

According to the information generating method of the present invention, in the adding process, the error correction code is added to the output information, so that the output information having the error correction code is generated. Then, in the replacing process, the part of the output information having the error correction code is replaced wi th the identification information, so that the partially replaced output information is generated.

Thus, for example, when the generated partially replaced output information is recorded onto the information record medium such as a DVD or the like and then the output information is reproduced from the information record medium, by allowing the reproducing operation only when the identification information is detected, it is possible to protect the output information having no identification information (i.e.. the illegally copied output information) from being illegally reproduced.

Moreover, since the part of the output information having the error correction code is replaced with the identification information after the error correction code is added, even if the identification information is detected and the output information is reproduced when the output information is reproduced for example, the identification information is erased by the error correction at the time of the reproduction. Hence, the identification information is not recorded any longer when the reproduced output information is recorded by the information recording apparatus. Therefore, the information reproducing apparatus which can reproduce the output information only when the identification information is detected can protect the reproduction of the output information recorded by the information recording apparatus. Namely, it is possible to protect the output information from being illegally reproduced.

Furthermore, for example, assuming that the partially replaced output information is transmitted to another information reproducing apparatus and is reproduced thereby, if the reproducing operation is allowed only when the identification information is detected, even if the output information having no identification information is transmitted, its illegal reproduction can be protected.

Moreover, even if the identification information is detected and the output information is reproduced after the transmission, the identification information is erased by the error correction at the time of the reproduction. Hence, the identification information is not recorded any longer when the reproduced output information is recorded by the information recording apparatus. Therefore, the information reproducing apparatus, which can reproduce the output information only when the identification information is detected, can protect the reproduction of the output information recorded by the information recording apparatus. Namely, it is possible to protect the output information from being illegally reproduced.

In one aspect of the information generating method of the present invention, the information generating method is further provided with the process of adding sub-identification information, which indicates that the output information is not illegally copied, to the output information. In the error correction code adding process, the error correction code is added to the output information to which the sub-identification information is added to thereby generate the output information having the error correction code and the sub-identification information. Assuming that M represents the sub-identification information and N represents the identification information, a relationship between the sub-identification information M and the identification information N is expressed on the basis of a predetermined function f by a following expression (1).

$$M = f(N) \quad \dotsc \quad (1)$$

According to this aspect, in the sub-identification adding process, the sub-identification information is added to the output information. Then, in the error correction code adding process, the error correction code is added to the output information to which the sub-identification information is added, so that the output information having the error correction code and the sub-identification information is generated. At this time, the sub-identification information M is a predetermined function of the identification information N.

Thus, for example, when the output information is reproduced from the information record medium, by allowing the reproducing operation only when both of the sub-identification information M and the identification information N are detected, even if either one of the sub-identification information M and the identification information N is obtained by some unjust or unfair method, another one of the sub-identification information M and the identification information N cannot be correctly obtained unless the function f is determined. Therefore, in the reproducing apparatus for reproducing the output information, it is possible to more effectively protect the output information, which has been illegally recorded, from being reproduced.

In another aspect of the information generating method of the present invention, the error correction code comprises an inner code inspection symbol and an outer code inspection symbol. In the replacing process, the part of the output information having the error correction code at a portion thereof where the inner code inspection symbol and the outer code inspection symbol overlap to each other is replaced with the identification information.

According to this aspect, for example, the inner code inspection symbol or the outer code inspection symbol used for the error correction of the output information itself at the time of reproducing the output information which has been recorded on the information record medium, is not replaced with the identification information. Thus, the error correction ability with respect to the output information itself is not degraded. Further, in the similar manner, at the time of reproducing the output information which has been transmitted, the error correction ability with respect to the output information itself is not degraded.

The above object of the present invention can be also achieved by an information record medium on and from which record information is recorded and reproduced. The information record medium is provided with: an error correction code recorded on the information record medium by adding the error correction code, which is used for an error correction of the record information when the record information is reproduced, to the record information to thereby generate the record information having the error correction code; and identification information recorded on the information record medium by replacing a part of the record information having the error correction code, with the identification information indicating that the record information to be reproduced is not illegally copied to thereby generate the partially replaced record information.

According to the information record medium of the present invention, by replacing the part of the record information having the error correction code with the identification information, the partially replaced record information is recorded. Thus, by allowing the reproduction only when the identification is detected at the time of reproducing the partially replaced record information form the information record medium, it is possible to protect the record information, which does not have the identification information (i.e., which has been illegally copied), from being illegally reproduced.

Further, since the part of the record information having the error correction code is replaced with the identification information, even if the identification information is detected and the record information is reproduced, the identification information is erased by the error correction at the time of reproduction. Thus, at the time of recording the reproduced record information by another information recording apparatus, the identification information is not recorded. Thus, by allowing the reproduction of the record information only when the identification information is detected, it is possible to protect the record information recorded by this another information recording apparatus.

In one aspect of the information record medium of the present invention, the information record medium is further provided with sub-identification information recorded on the information record medium by adding the sub-identification information, which indicates that the record information is not illegally copied, to the record information in advance. The error correction code is recorded by adding the error correction code to the record information to which the sub-identification information is added to thereby generate the record information having the error correction code and the sub-identification information. Assuming that M represents the sub-identification information and N represents the identification information, a relationship between the sub-identification information M and the identification information N is expressed on the basis of a predetermined function f by the aforementioned expression (1) (i.e., M = f (N)).

According to this aspect, the output information having the error correction code and the sub-identification information is recorded on the information record medium, and that the sub-identification information M is a predetermined function of the identification information N.

Thus, for example, when the record information is reproduced from the information record medium, by allowing the reproducing operation only when both of the sub-identification information M and the identification information N are detected, even if either one of the sub-identification information M and the identification information N is obtained by some unjust or unfair method, another one of the sub-identification information M and the identification information N cannot be correctly obtained unless the function f is determined. Therefore, in the reproducing apparatus for reproducing the record information, it is possible to more effectively protect the record information, which has been illegally recorded, from being reproduced.

In another aspect of the information record medium, the error correction code comprises an inner code inspection symbol and an outer code inspection symbol. The part of the record information having the error correction code at a portion thereof where the inner code inspection symbol and the outer code inspection symbol overlap to each other is replaced wi th the identification information.

According to this aspect, for example, the inner code inspection symbol or the outer code inspection symbol used for the error correction of the record information itself at the time of reproducing the record information which has been recorded on the information record medium, is not replaced with the identification information. Thus, the error correction ability with respect to the record information itself is not degraded.

The above object of the present invention can be also achieved by a first information reproducing method of reproducing record information from the above described information record medium such as a DVD or the like of the present invention. The first information reproducing method is provided with the processes of: detecting the partially replaced record information from the information record medium; extracting the identification information from the partially replaced record information detected by the detecting process; judging whether or not the identification information is extracted by the extracting process: and reproducing the record information by applying the error correction to the partially replaced record information, which is detected by the detecting process, by use of the error correction code only if the identification information is judged to be extracted by the judging process.

According to the first information reproducing method, at first in the detecting process, the partially replaced record information is detected from the information record medium. Then, in the extracting process, the identification information is extracted from the partially replaced record information. Then, in the judging process, it is judged whether or not the identification information is extracted. Finally, in the reproducing process, only if the identification information is judged to be extracted, the record information is reproduced by applying the error correction to the partially replaced record information by use of the error correction code.

Therefore, since the reproduction can be performed only when the identification information is detected, it is possible to protect the record information having no identification information (i.e.. the illegally copied record information) from being illegally reproduced.

Further, since the part of the record information having the error correction code is replaced with the identification information, the identification information is erased by the error correction at the time of reproduction. Thus, at the time of recording the reproduced record information by another information recording apparatus, the identification information is not recorded. Therefore, by allowing the reproduction of the record information only when the identification information is detected, it is possible to protect the record information recorded by this another information recording apparatus.

The above object of the present invention can be also achieved by a second information reproducing method of reproducing record information from the above described information record medium such as a DVD or the like of the present invention. The second information reproducing method is provided with the processes of: detecting the partially replaced record information from the information record medium; extracting the identification information from the partially replaced record information detected by the detecting process; judging whether or not the identification information is extracted by the extracting process; applying the error correction to the partially replaced record information, which is detected by the detecting process, by use of the error correction code; and reproducing the record information on the basis of the partially replaced record information, to which the error correction is applied, only if the identification information is judged to be extracted by the judging process.

According to the second information reproducing method, at first in the detecting process, the partially replaced record information is detected from the information record medium. Then, in the extracting process, the identification information is extracted from the partially replaced record information. Then, in the judging process, it is judged whether or not the identification information is extracted. Then, in the error correction applying process, the error correction is applied to the partially replaced record information by use of the error correction code. Finally, in the reproducing process, only if the identification information is judged to be extracted, the record information is reproduced on the basis of the partially replaced record information.

Therefore, since the reproduction can be performed only when the identification information is detected, it is possible to protect the record information having no identification information (i.e., the illegally copied record information) from being illegally reproduced.

Further, since the part of the record information having the error correction code is replaced with the identification information, the identification information is erased by the error correction at the time of reproduction. Thus, at the time of recording the reproduced record information by another information recording apparatus, the identification information is not recorded. Therefore, by allowing the reproduction of the record information only when the identification information is detected, it is possible to protect the record information recorded by this another information recording apparatus.

In one aspect of each of the first and second information reproducing methods of the present invention, the information record medium is further provided with sub-identification information recorded on the information record medium by adding the sub-identification information, which indicates that the record information is not illegally copied, to the record information in advance. The error correction code is recorded by adding the error correction code to the record information to which the sub-identification information is added to thereby generate the record information having the error correction code and the sub-identification information. Assuming that M represents the sub-identification information and N represents the identification information, a relationship between the sub-identification information M and the identification information N is expressed on the basis of a predetermined function f by the aforementioned expression (1) (i.e., $M = f(N)$). In the extracting process, the identification information and the sub-identification information are extracted from the partially replaced record information. In the judging process, it is judged whether or not the identification information is extracted, and it is judged whether or not the relationship is expressed by the expression (1). In the reproducing process, the record information is reproduced only if the identification information is judged to be extracted and the relationship is judged to be expressed by the expression (I).

According to this aspect, in the extracting process, the identification information and the sub-identification information are extracted from the partially replaced record information. Then, in the judging process, it is judged whether or not the identification information is extracted, and it is judged whether or not the relationship is expressed by the expression (1). Finally, in the reproducing process, only if the identification information is judged to be extracted and the relationship is judged to be expressed by the expression (1), the record information is reproduced.

Thus, since the reproducing operation is performed only when both of the sub-identification information M and the identification information N are detected, even if either one of the sub-identification information M and the identification information N is obtained by some unjust or unfair method, another one of the sub-identification information M and the identification information N cannot be correctly obtained unless the function f is determined. Therefore, at the time of reproduction, it is possible to more effectively protect the record information, which has been illegally recorded, from being reproduced.

In another aspect of each of the first and second information reproducing methods of the present invention, the error correction code comprises an inner code inspection symbol and an outer code inspection symbol. The part of the record information having the error correction code at a portion thereof where the inner code inspection symbol and the outer code inspection symbol overlap to each other is replaced with the identification information.

According to this aspect, the inner code inspection symbol or the outer code inspection symbol used for the error correction of the record information itself is not replaced with the identification information. Thus, the error correction ability with respect to the record information itself is not degraded.

The above object of the present invention can be also achieved by an information generating apparatus for generating output information to be outputted. The information generating apparatus is provided with: an error correcting code adding device for adding an error correction code, which is used for an error correction of the output information when the output information is outputted, to the output information to thereby generate the output information having the error correction code; and a replacing device for replacing a part of the output information having the error correction code, which is generated by the error correcting code adding device, with identification information indicating that the output information to be outputted is not illegally copied to thereby generate the partially replaced output information.

According to the information generating apparatus of the present invention, by the error correctingcode adding device, the error correction code is added to the output information, so that the output information having the error correction code is generated. Then, by the replacing device, the part of the output information having the error correction code is replaced with the identification information, so that the partially replaced output information is generated.

Thus, for example, when the generated partially replaced output information is recorded onto the information record medium such as a DVD or the like and then the output information is reproduced from the information record medium, by allowing the reproducing operation only when the identification information is detected, it is possible to protect the output information having no identification information (i.e., the illegally copied output information) from being illegally reproduced.

Moreover, since the part of the output information having the error correction code is replaced with the identification information after the error correction code is added, even if the identification information is detected and the output information is reproduced when the output information is reproduced for example, the identification information is erased by the error correction at the time of the reproduction. Hence, the identification information is not recorded any longer when the reproduced output information is recorded by the information recording apparatus. Therefore, the information reproducing apparatus which can reproduce the output information only when the identification information is detected can protect the reproduction of the output information recorded by the information recording apparatus.

Furthermore, for example, assuming that the partially replaced output information is transmitted to another information reproducing apparatus and is reproduced thereby, if the reproducing operation is allowed only when the identification information is detected, even if the output information having no identification information is transmitted, its illegal reproduction can be protected.

Moreover, even if the identification information is detected and the output information is reproduced after the transmission, the identification information is erased by the error correction at the time of the reproduction. Hence, the identification information is not recorded any longer when the reproduced output information is recorded by the information recording apparatus. Therefore, the information reproducing apparatus, which can reproduce the output information only when the identification information is detected, can protect the reproduction of the output information recorded by the information recording apparatus.

In one aspect of the information generating apparatus of the present invention, the information generating apparatus is further provided with a sub-identification information adding device for adding sub-identification information, which indicates that the output information is not illegally copied, to the output information. The error correction code adding device adds the error correction code to the output information to which the sub-identification information is added to thereby generate the output information having the error correction code and the sub-identification information. Assuming that M represents the sub-identification information and N represents the identification information, a relationship between the sub-identification information M and the identification information N is expressed on the basis of a predetermined function f by the expression (1) (i.e.. $M = f(N)$).

According to this aspect, for example, when the output information is reproduced from the information record medium, by allowing the reproducing operation only when both of the sub-identification information M and the identification information N are detected, even if either one of the sub-identification information M and the identification information N is obtained by some unjust or unfair method, another one of the sub-identification information M and the identification information N cannot be correctly obtained unless the function f is determined. Therefore, in the reproducing apparatus for reproducing the output information, it is possible to more effectively protect the output information, which has been illegally recorded, from being reproduced.

In another aspect of the information generating apparatus of the present invention, the error correction code comprises an inner code inspection symbol and an outer code inspection symbol. The replacing device replaces the part of the output information having the error correction code at a portion thereof where the inner code inspection symbol and the outer code inspection symbol overlap to each other with the identification information.

According to this aspect, for example, the inner code inspection symbol or the outer code inspection symbol used for the error correction of the output information itself at the time of reproducing the output information which has been recorded on the information record medium, is not replaced with the identification information. Thus, the error correction ability with respect to the output information itself is not degraded. Further, in the similar manner, at the time of reproducing the output information which has been transmitted, the error correction ability with respect to the output information itself is not degraded.

The above object of the present invention can be also achieved by a first information reproducing apparatus for reproducing record information from the above described information record medium of the present invention. The first information reproducing apparatus is provided with: a detecting device for detecting the partially replaced record information from the information record medium; an extracting device for extracting the identification information from the partially replaced record information detected by the detecting device; a judging device for judging whether or not the identification information is extracted by the extracting device; and a reproducing device for reproducing the record information by applying the error correction to the partially replaced record information, which is detected by the detecting device, by use of the error correction code only if the identification information is judged to be extracted by the judging device.

According to the first information reproducing apparatus, at first by the detecting device, the partially replaced record information is detected from the information record medium. Then, by the extracting device, the identification information is extracted from the partially replaced record information. Then, by the judging device, it is judged whether or not the identification information is extracted. Finally, by the reproducing device, only if the identification information is judged to be extracted, the record information is reproduced by applying the error correction to the partially replaced record information by use of the error correction code.

Therefore, since the reproduction can be performed only when the identification information is detected, it is possible to protect the record information having no identification information (i.e., the illegally copied record information) from being illegally reproduced.

Further, since the part of the record information having the error correction code is replaced with the identification information, the identification information is erased by the error correction at the time of reproduction. Thus, at the time of recording the reproduced record information by another information recording apparatus, the identification information is not recorded. Therefore, by allowing the reproduction of the record information only when the identification information is detected, it is possible to protect the record information recorded by this another information recording apparatus.

The above object of the present invention can be also achieved by a second information reproducing apparatus for reproducing record information from the above described information record medium of the present invention. The second information reproducing apparatus is provided with: a detecting device for detecting the partially replaced record information from the information record medium: an extracting device for extracting the identification information from the partially replaced record information detected by the detecting device; a judging device for judging whether or not the identification information is extracted by the extracting device; an error correction applying device for applying the error correction to the partially replaced record information, which is detected by the detecting device, by use of the error correction code; and a reproducing device for reproducing the record information on the basis of the partially replaced record information, to which the error correction is applied, only if the identification information is judged to be extracted by the judging device.

Therefore, since the reproduction can be performed only when the identification information is detected, it is possible to protect the record information having no identification information (i.e., the illegally copied record information) from being illegally reproduced.

Further, since the part of the record information having the error correction code is replaced with the identification information, the identification information is erased by the error correction at the time of reproduction. Thus, at the time of recording the reproduced record information by another information recording apparatus, the identification information is not recorded. Therefore, by allowing the reproduction of the record information only when the identification information is detected, it is possible to protect the record information recorded by this another information recording apparatus.

In one aspect of each of the first and second information reproducing apparatuses of the present invention, the information record medium is further provided with sub-identification information recorded on the information record medium by adding the sub-identification information, which indicates that the record information is not illegally copied, to the record information in advance. The error correction code is recorded by adding the error correction code to the record information to which the sub-identification information is added to thereby generate the record information having the error correction code and the sub-identification information. Assuming that M represents the sub-identification information and N represents the identification information, a relationship between the sub-identification information M and the identification information N is expressed on the basis of a predetermined function f by the expression (1) (i.e., M = f(N)). The extracting device extracts the identification information and the sub-identification information from the partially replaced record information. The judging device judges whether or not the identification information is extracted, and whether or not the relationship is expressed by the expression (I). The reproducing device reproduces the record information only if the identification information is judged to be extracted and the relationship is judged to be expressed by the expression (I).

According to this aspect, by the extracting process, the identification information and the sub-identification information are extracted from the partially replaced record information. Then, by the judging process, it is judged whether or not the identification information is extracted, and it is judged whether or not the relationship is expressed by the expression (1). Finally, by the reproducing process, only if the identification information is judged to be extracted and the relationship is judged to be expressed by the expression (1), the record information is reproduced.

Thus, since the reproducing operation is performed only when both of the sub-identification information M and the identification information N are detected, even if either one of the sub-identification information M and the identification information N is obtained by some unjust or unfair method, another one of the sub-identification information M and the identification information N cannot be correctly obtained unless the function f is determined. Therefore, at the time of reproduction, it is possible to more effectively protect the record information, which has been illegally recorded, from being reproduced.

In another aspect of each of the first and second information reproducing apparatuses of the present invention, the error correction code comprises an inner code inspection symbol and an outer code inspection symbol. The part of the record information having the error correction code at a portion thereof where the inner code inspection symbol and the outer code inspection symbol overlap to each other is replaced with the identification information.

According to this aspect, the inner code inspection symbol or the outer code inspection symbol used for the error correction of the record information itself is not replaced with the identification information. Thus, the error correction ability with respect to the record information itself is not degraded.

The nature, utility, and further features of this invention will be more clearly apparent from the following detailed description with respect to preferred embodiments of the invention when read in conjunction with the accompanying drawings briefly described below.

BRIEF DESCRIPTION OF THE DRAWINGS

FIG. 1 is a block diagram showing a schematic construction of a cutting apparatus as an embodiment of the present invention;
FIG. 2 is a flow chart showing a cutting operation of the cutting apparatus:
FIG. 3A is a diagram showing a data structure of a data sector in the embodiment;
FIG. 3B is a diagram showing a data structure of an ECC block in the embodiment;
FIG. 4 is a diagram showing an ECC block after inserting the identification information in the embodiment:
FIG. 5 is a diagram showing a physical format of data in the embodiment;
FIG. 6 is a block diagram showing a schematic construction of a reproducing apparatus as another embodiment of the present invention; and
FIG. 7 is a flow chart showing a reproducing operation of the reproducing apparatus.

DETAILED DESCRIPTION OF THE PREFERRED EMBODIMENTS

Next, preferred embodiments of the present invention will, be explained with reference to the drawings. Incidentally, embodiments described below are embodiments in which the present invention is applied to an information recording apparatus for recording information onto the DVD (more concretely, a cutting apparatus for cutting or manufacturing a stamper disc used for a mass production of the DVD) and an information reproducing apparatus for reproducing the information from the DVD. Here, the DVD is one type of an optical disc in which a record capacity is improved by more than about seven times that of a conventional CD (Compact Disc) which is another type of an optical disc.

(I) Embodiment of Cutting Device

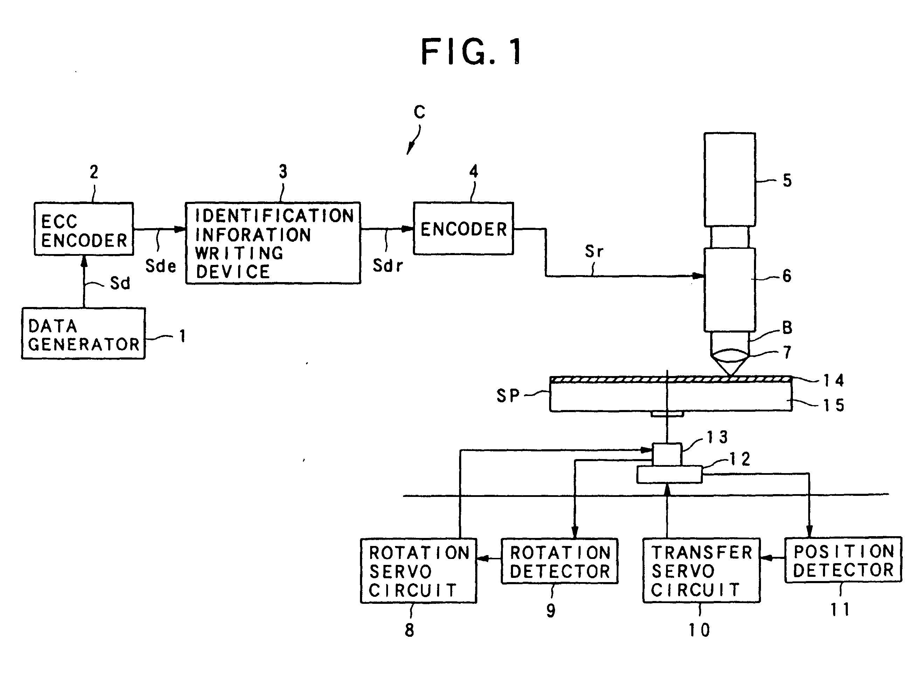

At first, an embodiment of the cutting device according to the present invention is explained with reference to FIGs. 1 to 5.

A conf igurat ion of the cut t ing device in the embodiment is explained with reference to FIG. 1.

As shown in FIG. 1, a cutting device C as the embodiment is provided with a data generator 1, an ECC (Error Correcting Code) encoder 2 servicing as one example of an adding device, an identification information wri ting device 3 servicing as one example of a replacing device, an encoder 4. a laser generator 5, an optical modulator 6. an objective lens 7, a spindle motor 13, a rotation detector 9, a rotation servo circuit 8, a transferring unit 12, a position detector 11 and a transfer servo circuit 10.

A stamper disc SP is provided with a resist 14 and a glass substrate 15. The resist 14 is exposed to a light when a light beam B described later is radiated to the resist 14 to thereby form a pit having a shape corresponding to a change of a strength (i.e., a light intensity) of the light beam B.

Next, a schematic operation will be explained.

The data generator 1 applies a process of generating a data sector describe later and the like to data, which are to be recorded on an DVD (e. g., video information, audio information, data to be utilized in a computer and the like), and then outputs the generated data to the ECC encoder 2 as a data signal Sd.

Then, the ECC encoder 2 generates an ECC block described later of the data included in the data signal Sd to be recorded on the DVD, and outputs the generated ECC block to the identification information writing device 3 as an addition data signal Sde.

Then, the identification information writing device 3 replaces a part of the ECC block included in the addition data signal Sde with identification information described later (i.e., identification data indicating that the data to be recorded on the DVD is legal data (which is not illegally copied)) to generate a replacement data signal Sdr.

Then, the encoder 4 applies an interleave and an 8-16 modulation to the ECC blocks included in the replacement data signal Sdr to generate a record data signal Sr.

On one hand, the laser generator 5 radiates onto the stamper disc SP the light beam B for generating the pits as the information pit on the DVD.

At this time, the optical modulator 6 strength-modulates (i.e., intensity-modulates) the light beam B radiated from the laser generator 5 by using the record data signal Sr.

Next, the objective lens 7 collects the strength-modulated light beam B onto the resist 14 of the stamper disc SP.

At this time, the spindle motor 13 rotates the stamper disc SP.

The rotation detector 9 detects a rotational number of the stamper disc SP.

Accordingly, the rotation servo circuit 8 servo-controls the rotation of the stamper disc SP on the basis of the detected rotational number.

In order to form on the stamper disc SP a spiral or coaxial track on which the pits are aligned, the transferring unit 12 moves the spindle motor 13 and the stamper disc SP in a radial direction of the stamper disc SP in accordance with the rotation of the stamper disc SP.

At this time, the position detector 11 detects the position of the transferring unit 12.

Then, the transfer servo circuit 10 servo-controls the movement of the transferring unit 12 on the basis of the detected position of the transferring unit 12.

The above mentioned operations enable the formation of the pits corresponding to the record data signal Sr on the spiral or coaxial track of the resist 14 of the stamper disc SP. Thus, the stamper disc SP is completed which services as a punching die to manufacture the DVD.

After that, the so-called replication processes, such as a resin molding, a formation of a reflection film, a formation of a protective layer and the like are executed by using the stamper disc SP. Then, the mass production of the DVD is performed, each servicing as a replica disc having the pits corresponding to the record data signal Sr.

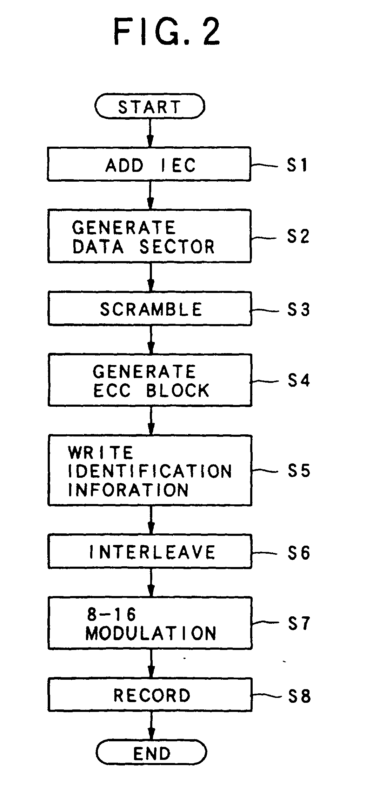

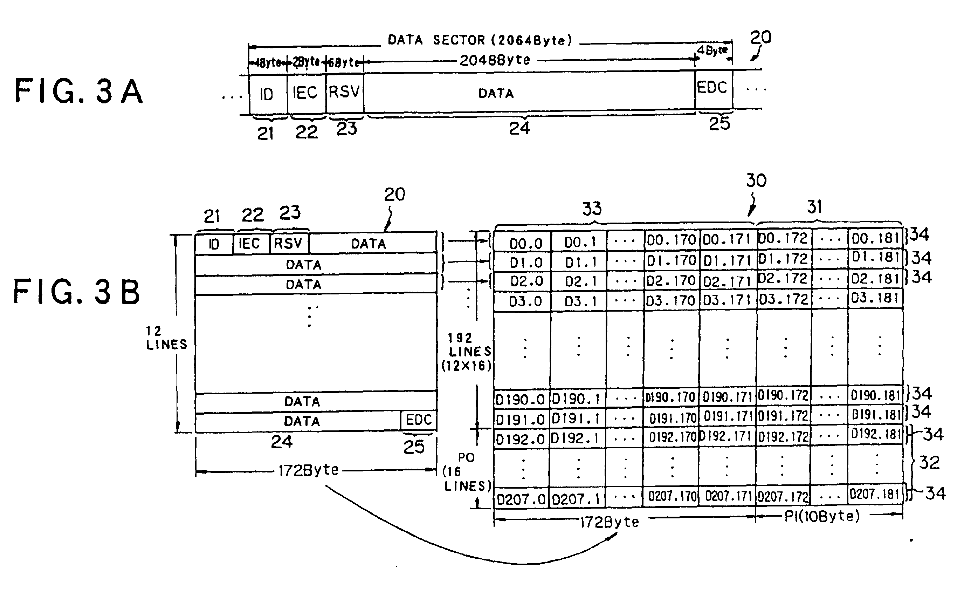

Next, the detailed operations to generate the record data signal Sr according to the present invention are explained with reference to FIGs. 1 to 5. FIG.2 is a flowchart showing the operations. FIGs.3A to 5 are diagrams showing a configuration of the data generated by the operations (i.e., the data included in the record data signal Sr).

When the record data signal Sr is generated by the cutting device C in the embodiment, a structure of raw data to be recorded is firstly changed into a configuration including a plurality of information units referred to as "data sectors".

That is, as shown in FIG. 2, the raw data to be recorded is firstly divided into data portions, each having 2048 bytes. An ID information indicative of a start position of the data sector and an ID information error correction code (IEC (ID Data Error correction Code)) are added to each divided data portion (Step S1).

Next, a spare data and an error detection code (EDC) to detect an error in the divided data of 2048 bytes are added to the data generated at the step S1. Accordingly, one data sector is generated (Step S2).

Now, the actual configuration of the data sector is explained. As shown in FIG. 3A, an ID information 21, an ID information error correction code 22, a spare data 23, a data 24 divided from the raw data and an error detection code 25 are generated in this order from a lead of one data sector 20. Then, the data to be recorded is composed of a plurality of consecutive data sectors 20.

In FIG. 2 again, after the data sectors 20 are generated, the scramble modulation is applied to the data 24 by using a predetermined key data (Step S3).

The processes at the steps S1 to S3 are executed by the data generator 1 to then output the data signal Sd including the scramble-modulated data 24. Incidentally, the key data used for the scramble is recorded as the data 24 together wi th other video information and the like.

Next, the ECC encoder 2 uses the data sectors 20 included in the data signal Sd, generates the ECC block servicing as one example of a correction unit in an error correction performed when the data recorded on the DVD is reproduced, and then outputs the addition data signal Sde including the ECC block to the identification information writing device 3 (Step S4).

Now, the process of generating the ECC block is explained in detail. As shown in FIG. 3B. one data sector 20 is firstly divided for each 172 bytes. The respective divided data (hereafter, each data is referred to as a data block 33) are aligned in a vertical direction (refer to a left side of FIG. 3B). At this time, 12 lines of the data blocks 33 are aligned in the vertical direction.

For each of the data blocks 33 aligned in the vertical direction, an ECC-INNER code 31 of 10 bytes (which is also referred to as a PI (Parity In) code and implies an error correction code to correct the data corresponding to one horizontal line in the ECC block) is added to an end of the data block 33. Accordingly, one correction block 34 is constituted (refer to a right side of FIG.3B). At this stage, the correction blocks 34 of 12 lines, each having the ECC-INNER code 31 at the end thereof, are aligned in the vertical direction. After that, this process is repeated for the 16 data sectors 20. Accordingly, the correction blocks 34 of 192 lines are generated.

Then, the correction blocks 34 of 192 lines are divided from the beginning thereof in the vertical direction for each byte in the condition that the correction blocks 34 of 192 lines are aligned in the vertical direction. The 16 ECC-OUTER codes (each code is also referred to a P0 (Pari ty Out) code and implies an error correction code to correct the data corresponding to one vertical column in the ECC block) 32 are added to the respective divided data. The ECC-OUTER code 32 is also added to the ECC-INNER code 31 in the correction block 34.

The above mentioned processes enable an ECC block 30 including the 16 data sectors 20 to be generated as shown in the right side of FIG.3B. Then, the addition data signal Sde including the ECC block 30 is outputted to the identification information writing device 3.

At this time, the total amount of the information included in the one ECC block 30 is expressed as following.

$$(172+10) \text{ bytes} \times (192+16) \text{ rows} = 37856 \text{ bytes} \quad \ldots \ldots \quad (2)$$

Among that, the amount of the actual data 24 is expressed as following.

$$2048 \text{ bytes} \times 16 = 32768 \text{ bytes} \quad \ldots \ldots \quad (3)$$

In the ECC block 30 shown in the right side of FIG. 3B, the data of one byte is represented by "D#. ‡". For example, "D1. 0" represents the data of one byte located at the $1^{st}$ line and the $0^{th}$ column. "D190. 170" represents the data of one byte located at the $190^{th}$ line and the $170^{th}$ column. Thus, the ECC-INNER codes 31 are located from the $172^{nd}$ column to the $181^{st}$ column, and the ECC-OUTER codes 32 are located from the $192^{nd}$ line to the $207^{th}$ line.

Moreover, the one correction block 34 is consecutively recorded on the DVD (on the stamper disc SP).

Here, the reason why the ECC block 30 is constituted so as to include both of the ECC-INNER code 31 and the ECC-OUTER code 32 as shown on the right side of FIG.3B is that the data aligned in the horizontal direction on the right side of FIG. 3B is corrected by using the ECC-INNER codes 31. and the data aligned in the vertical direction on the right side of FIG. 3B is corrected by using the ECC-OUTER codes 32. That is, dual error corrections in the horizontal and vertical directions can be performed in the ECC block 30 shown on the right side of FIG.3B. Thus, the error correction may be powerfully performed as compared with the error correction process used in the conventional CD or the like.

Now, this aspect is explained more actually. For example, even if one correction block 34 (as mentioned above, it includes the data of totally 182 bytes including the ECC-INNER codes 31 corresponding to one line and are consecutively recorded on the DVD) are entirely broken by a scratch of the DVD and the like, when it is seen from the vertical direction, it is only the break of the data of one byte for a column of ECC-OUTER codes 32. Hence, if the ECC-OUTER codes 32 at the respective columns are used to perform the error correction, even if the one correction block 34 is entirely broken, it is still possible to correctly perform the error correction to accurately perform the reproduction.

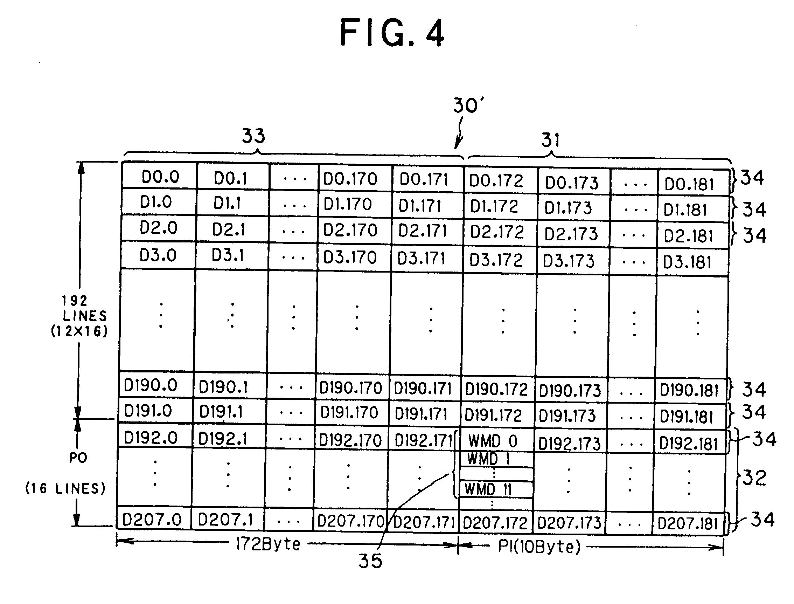

In FIG. 2 again, the identification information writing device 3 replaces a part of the above generated ECC block 30 with the identification information indicating that the data to be recorded by the cutting device C is the legal (original) data and is not illegally copied (Step S5). Now, this replacing process is explained wi th reference to FIG. 4. In this embodiment, in the ECC block 30, 12 bytes located from the upper left end to the bottom (that is, from a position at the $192^{nd}$ line and the $172^{nd}$ column to a position at the $203^{rd}$ line and $172^{nd}$ column in the ECC block 30) in the portion where the ECC-INNER codes 31 and the ECC-OUTER codes 32 overlap to each other (i. e.. the bottom right portion in the one ECC block 30) are replaced with the identification information 35 (typically, it may be referred to as a "water mark"). Incidentally, a position in the ECC block 30 into which the identification information 35 is inserted is stored in a (legal) information reproducing apparatus (described later) by which the data recorded on the DVD is to be reproduced.

In FIG. 2 again, after the identification information 35 is written at the step S5 of FIG. 2, the replacement data signal Sdr constituted by an ECC block 30' including therein the identification information 35 is outputted to the encoder 4.

Then, the encoder 4 applies the interleave and the 8-16 modulation to the ECC block 30' included in the replacement data signal Sdr, to output the record data signal Sr (Steps S6 and S7).

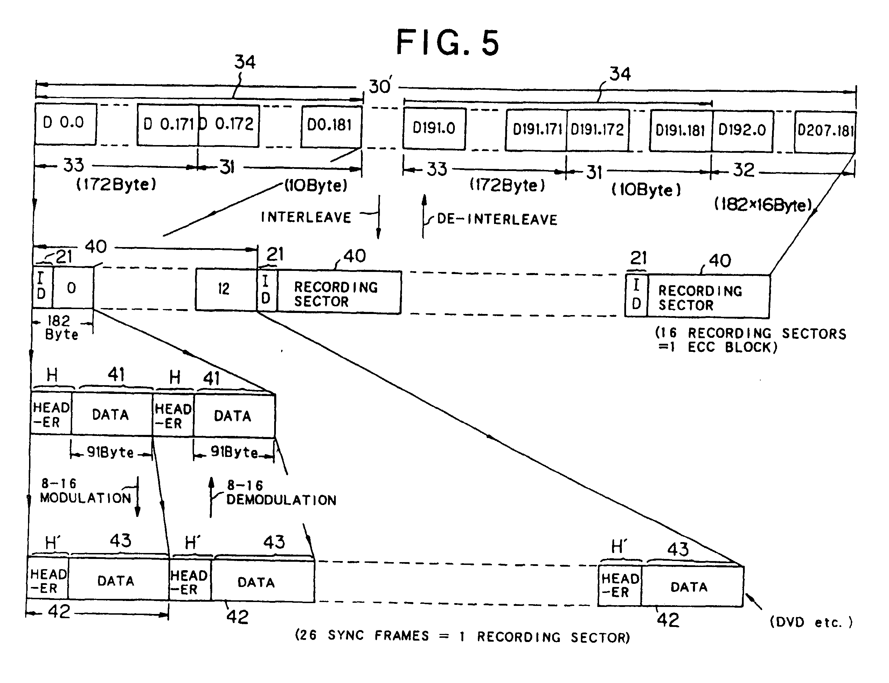

The processes at the steps S6 and S7 are actually explained with reference to FIG. 5. Incidentally, data represented by "D#. ‡" in FIG. 5 corresponds to the data described on the right side of FIG. 3B.

At first, when the interleave is applied to the ECC block 30' at the step S6, the ECC blocks 30' are firstly aligned in a horizontal direction for each correction block 34, as shown in a top stage of FIG. 5. The interleave is performed by real igning the aligned data under a certain rule. Then, information corresponding to the ECC blocks 30' is divided into 16 recording sectors 40. At this time, one recording sector 40 includes information of 2366 bytes (37856 bytes ÷ 16). The data sectors 20 and the ECC-INNER code 31 or the ECC-OUTER code 32 and the identification information 35 are mixed in the one recording sector 40. However, the ID information 21 in the data sector 20 is located at the lead of each recording sector 40 (refer to FIG.3A).

The one recording sector 40 is divided into data portions 41 each having 91 bytes. A header H is added to each data portion 41. After that, the application of the 8-16 modulation to the recording sector 40 in the above mentioned state enables a synchronization frame 42 to be generated for each data portion 41. At this time, the synchronization frame 42 is composed of a header H' and a data 43. The amount of the information wi thin the synchronization frame 42 is expressed as following.

$$91 \text{ bytes} \times 8 \times (16/8) = 1456 \text{ bytes} \quad \ldots \ldots \quad (4)$$

The information is written onto the DVD in a condition that the synchronization frames 42 are consecutive. At this time, the one recording sector 40 includes 26 synchronization frames 42.

Since the above mentioned format is constituted and then the data is recorded on the DVD (i.e., the stamper disc SP), the applications of an 8-16 demodulation and a de-interleave (refer to FIG. 5) when the data is reproduced enables the original ECC blocks 30' to be reconstructed. Thus, the above mentioned powerful error correction enables the information to be accurately reproduced.

(II) Embodiment of Information Reproducing Apparatus

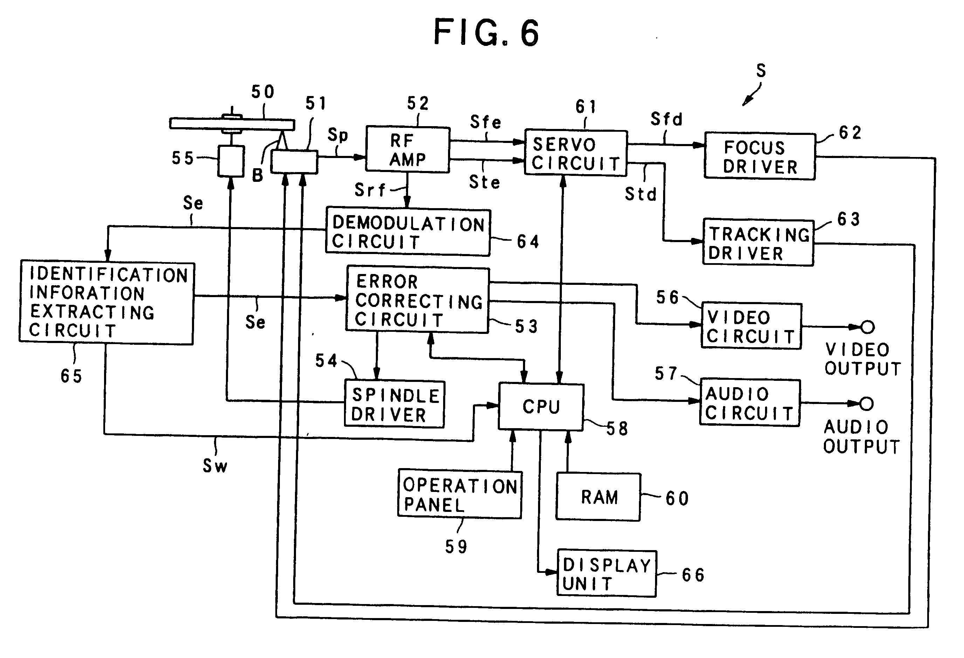

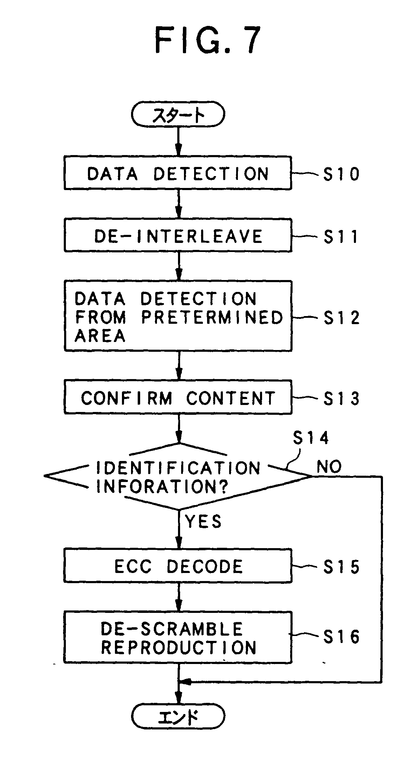

An embodiment of an information reproducing apparatus for reproducing the data on the DVD, which is manufactured by using the stamper disc SP on which the data is recorded by the cutting device C, is explained wi th reference to FIGs. 6 and 7. Incidentally, the information reproducing apparatus explained below is an information reproducing apparatus which, in case that both of the video information and the audio information are recorded on the DVD as data, has a function of reproducing both of the video information and the audio information.

At first, a configuration of the information reproducing apparatus in the embodiment is explained with reference to FIG. 6.

As shown in FIG.6, an information reproducing apparatus S in the embodiment is provided with an optical pickup 51 servicing as one example of a detecting device, an RF (Radio Frequency) amplifier 52, an error correcting circuit 53 servicing as one example of an error correcting device, a spindle driver 54, a spindle motor 55, a video circuit 56 servicing as one example of a reproducing device, an audio circuit 57 servicing as another example of a reproducing device, a CPU 58 servicing as one example of a judging device, an operation panel 59, an RAM (Random Access Memory) 60, a servo circuit 61, a focus driver 62, a tracking driver 63, a demodulation circuit 64 servicing as another example of a reproducing device, an identification information extracting circuit 65 servicing as one example of an extracting device and a display unit 66.

Next, schematic operations will be explained.

A DVD 50 manufactured by using the stamper disc SP is loaded on a turn table (not shown) and rotated by the spindle motor 55.

Then, the optical pickup 51 radiates to the DVD 50, which is being rotated, a light beam B so as to reproduce the record information. A detection signal Sp corresponding to the pits formed on the DVD 50 is generated on the basis of a reflection light of the radiated light beam B and is outputted to the RF amplifier 52.

Then, on the basis of the detection signal Sp, the RF amplifier 52 generates an RF signal Srf corresponding to the data recorded on the DVD 50. generates a tracking error signal Ste indicative of a displacement of a position of the light spot generated on an information record surface of the DVD 50 by the radiation of the light beam B from a track composed of the pits on the DVD 50, and generates a focus error signal Sfe indicative of a displacement of a focus position of the light beam B from the information record surface. Then, the RF amplifier 52 outputs the generated RF signal Srf to the demodulation circuit 64, and also outputs the generated tracking error signal Ste and the generated focus error signal Sfe to the servo circuit 61.

Accordingly, the servo circuit 61 generates a tracking drive signal Std to servo-drive an objective lens (not shown), which collects the light beam B onto the information record surface of the DVD 50, in a direction parallel to the information record surface such that the position of the light spot coincides with that of the track, under the control of the CPU 58, on the basis of the tracking error signal Ste. Then, the servo circuit 61 outputs the generated tracking drive signal Std to the tracking driver 63.

In parallel to this, the servo circuit 61 generates a focus drive signal Sfd to serve-drive the objective lens in a direction vertical to the information record surface, such that a beam collecting position of the light beam B coincides with the information record surface of the DVD 50, under the control of the CPU 58, on the basis of the focus error signal Sfe. Then, the servo circuit 61 outputs the generated focus drive signal Sfd to the focus driver 62.

The tracking driver 63 and the focus driver 62 apply processes, such as an amplifying process and the like, to the tracking drive signal Std and the focus drive signal Sfd, respectively. Then, the tracking driver 63 and the focus driver 62 output the processed signals to an actuator (not shown) in the optical pickup 51 and drive it to thereby servo-control the position of the light spot and the beam collecting position of the light beam B.

On one hand, the demodulation circuit 64 to which the RF signal Srf is inputted applies the de-interleave and the 8-16 demodulation (refer to FIG. 5) to the RF signal Srf and then generates a reproduction signal Se and further outputs it to the identification information extracting circuit 65.

Then, the identification information extracting circuit 65 extracts, from the reproduction signal Se, a part of the data which is supposed to include the identification information 35 (i.e., the data at a position which is supposed to include the identification information 35 in the one ECC block) as described later. Then, the identification information extracting circuit 65 outputs the extracted part to the CPU 58 as an identification information candidate signal Sw, and further outputs the inputted reproduction signal Se directly to the error correcting circuit 53.

The error correcting circuit 35 applies an error correct ing process using the ECC-INNER code 31 and the ECC-OUTER code 32 to the ECC blocks 30' included in the inputted reproduction signal Se, under the control of the CPU 58. Further, the error correcting circuit 35 separates the error-corrected data into the video information and the audio information, and then outputs a video signal including the video information to the video circuit 56 and outputs an audio signal including the audio information to the audio circuit 57.

Accordingly, the video circuits 56 restores the inputted video signal to the original video signal and outputs it to and displays it on a monitor (not shown) and the like. The audio circuit 57 restores the inputted audio signal to the original audio signal and outputs it to a speaker (not shown) and the like.

On the other hand, the error correcting circuit 53 detects a phase difference between a phase of the reproduction signal Se and a phase of a predetermined standard reproduction clock signal, in parallel to the above mentioned error correcting process. Then, the error correcting circuit 53 outputs a phase difference signal to the spindle driver 54. Then, the spindle driver 54 servo-controls a rotational number of the spindle motor 55 on the basis of the phase difference signal.

The CPU 58 controls the information reproducing apparatus S as a whole, in addition to the above mentioned controls to the respective constitutional elements. At this time, the information necessary for the control processes are inputted from the external through the operation panel 59.

Moreover, the information necessary for the control processes is transiently stored in the RAM 60, and is read out 10 the CPU 58 as the occasion demands.

The operational states of the information reproducing apparatus S and the like are displayed on the display unit 66, such as a liquid crystal display or the like, as the occasion demands.

Next, the reproduction operations of the data recorded on the DVD 50 according to the present invention will be explained with reference to FIGs. 6 and 7. FIG. 7 is a flowchart showing the reproduction operations.

In the reproducing operation, as shown in FIG. 7, the light beam B is firstly radiated from the optical pickup 51 onto the DVD 50. Then, the reflection light thereof is used to reproduce the data recorded on the DVD 50 (Step S10). At this time, the focus error signal Sfe and the tracking error signal Ste are generated by the RF amplifier 52 and are outputted to the servo circuit 61. Also, the RF signal Srf is generated and is outputted to the demodulation circuit 64.

Next, the demodulation circuit 64 applies the de-interleave and the 8-16 demodulation to the RF signal Srf (Step S11). Accordingly, the reproduction signal Se is generated.

At the stage of the reproduction signal Se, the data detected from the DVD 50 is kept in the condition that it includes the plurality of ECC blocks 30' shown in FIG. 4 by the de-interleave and the 8-16 demodulation.

Next, the identification information extracting circuit 65 detects the data at the area where the identification information 35 is recorded (in the case of the DVD 50 replicated by using the stamper disc SP manufactured by the cutting device C, this area is ranging from a position at the 192nd line and the 172nd column to a position at the 203rd

line and the 172nd column in the one ECC block 30'. Incidentally, the fact that the identification information 35 is included in this area is stored in advance in the CPU 58) from among the ECC block 30 within the reproduction signal Se. Then, the data is outputted to the CPU 58 as the identification information candidate signal Sw (Step S12).

Moreover, in parallel to this process, the identification information extracting circuit 65 outputs the inputted reproduction signal Se directly to the error correcting circuit 53.

Next, the CPU 58 confirms a content of the data included in the inputted identification information candidate signal Sw (Step S13). Then, it is judged whether or not the data is the identification information 35. namely, whether or not the identification information 35 is included in the reproduced ECC blocks 30' (Step S14).

If it is judged by the judgment at the step S14 that the data included in the identification information candidate signal Sw is the identification information 35 (Step S14 ; YES), it is judged that the data recorded on the DVD 50 is the legally (originally) recorded data, i.e., it is not the illegally copied data. Then, the error correcting circuit 53 error-corrects the data included in the reproduction signal Se, under the control of the CPU 58, by using the ECC-INNER codes 31 and the ECC-OUTER codes 32 within the ECC blocks 30', and further generates the video signal to be outputted to the video circuit 56 and the audio signal to be outputted to the audio circuit 57 (Step S15).

Incidentally, the identification information 35 within the ECC blocks 30' is treated as an error and is corrected in the error correction performed by the error correcting circuit 53. Thus, the identification information 35 is erased from the reproduced data. This reason is described below. That is, the identification information 35 is obtained by replacing the part of the data at the portion, where the ECC-OUTER code 32 and the ECC-INNER code 31 for the error correction overlap to each other, with the original data which is not used for the error correction. Hence, the identification information 35 is treated as the error in the error correction performed by the error correcting circuit 53.

When the error correction to the data within the reproduction signal Se is ended at the step S15, the generated video signal is de-scrambled by the video circuit 56 and is outputted to a monitor (not shown) and the like as the video image. Moreover, the audio signal is reproduced by the audio circuit 57 and is outputted to a speaker (not shown) (Step S16). Incidentally, the de-scramble performed by the video circuit 56 is executed by using the key data which is recorded together with other videos and the like as the data 24.

On the other hand, if it is judged by the judgment at the step S14 that the identification information 35 is not detected (Step S14 ; NO), it is judged that the data recorded on the DVD 50 is not the legally recorded data and thereby it is the illegally copied data. Thus, the process of reproducing the data is not executed, and the process is ended.

As explained above, according to the operations of the cutting device C and the information reproducing apparatus S in the embodiment, the error-corrected reproduction signal Se is reproduced only when the identification information 35 is detected. Hence, the data without the identification information 35 (that is, the illegally copied data) can be protected from being illegally reproduced.

Moreover, since the part of the ECC block 30 to which the ECC-INNER code 31 and the ECC-OUTER code 32 are added is replaced with the identification information 35, the identification information 35 is erased by the error correction at the time of the reproduction. Accordingly, the identification information 35 is not recorded any longer when the reproduced data is recorded in other information recording apparatus. Therefore, the data recorded in the other information recording apparatus can be protected from being reproduced, if the data can be reproduced only when the identification information 35 is detected.

Furthermore, since the part of the portion where the ECC-INNER code 31 and the ECC-OUTER code 32 overlap to each other is replaced with the identification information 35, the ECC-INNER code 31 and the ECC-OUTER code 32 which are used for the error correction of the data itself to be essentially reproduced are not replaced with the identification information 35. Hence, the ability of the error correction to the data itself is not too much degraded.

(III) Modified Embodiments

Next, various modified embodiments of the present invention will be explained.

In the above mentioned embodiments, the identification information 35 is located at the portion where the ECC-INNER code 31 and the ECC-OUTER code 32 overlap to each other. As a first modification, the identification information 35 may have a size which does not result in an obstacle to reproduce the data and may be inserted into a data section which does not belong to any of the ECC-INNER code 31 and the ECC-OUTER code 32 within the ECC block 30. Even in this case, the error correction at the time of the reproduction enables the identification information 35 to be erased. Thus, this first modified embodiment can protect the reproduction of the illegal copy and the like.

In the above mentioned embodiments, the amount corresponding to the 12 bytes at the predetermined position within the one ECC block 30 is replaced with the identification information. As a second modification, one identification information 35 may be divided and inserted into two or more ECC blocks 30. Moreover, the error correction codes dedicated to the identification information 35 may be inserted into the other ECC blocks 30.

According to this configuration, referring only to the one ECC block 30, the amount of the data replaced with the identification information 35 is reduced, which results in a further reduction of a drop of the whole error correction ability by the one ECC block 30. Moreover, the utilization of the error correction codes dedicated to the identification information 35 can protect the identification information 35 itself from being erroneously detected at the time of the reduction.

In the above mentioned embodiments, the identification information having no relation with the essential error correction code and the like is inserted as the identification information 35. As a thirdmodification, the information equivalent to the identification information can be included in the ECC block 30 without inserting the data other than the error correction code, as described below.

Namely, for example, it is assumed that the contents of the data of any one byte within the ECC block 30 are d0, d1, d2 .... d6 and d7, and that the value of a given bit within the identification information to be included within the ECC block 30 be "3". Then, an array of the data within the one byte is shifted by three bits, is rearranged as follows: d5, d6, d7, d0, d1 ... d4.

and is recorded onto the DVD 50 (i.e., the stamper disc SP).

Then, by determining the bit number to be shifted in order to obtain the raw data when error-correcting the rearranged data of the one byte at the time of the reproduction, the value of the bi within the identification information is obtained. The repetition of the processes for all of the bits within the identification information realizes the function equivalent to that of the identification information 35 without inserting any data other than the essential data into the ECC block 30.

According to the method of the third variation, assuming that the content of the rearranged data of the one byte is, for example, "10101010", the shifted number may become any one of "0", "2", "4" and "6" in the error correction at the time of the reproduction, which may prevent a unique specification. However, in this case, an increase of a redundancy in the error correction code or a combination of a pattern matching and an error correction enables a proper identification information to be obtained at the time of the reproduction. That is, for example, the data of "10101010" is repeatedly inserted (i.e., the redundancy is increased) to thereby reduce the number of the data combinations which may be considered at the time of the reproduction. Moreover, the error corrections to the respective data enable the proper identification information (namely, the rightly shifted number) to be obtained.

In the above ment ioned embodiments, the key data for the de-scramble at the time of the reproduction is recorded on the data area within the ECC block 30. As a fourth modification, the key data itself may be included in the identification information 35. According to this configuration, the identification information 35 is erased at the time of the reproduction, which also causes the key data once used for the de-scramble at the time of the reproduction to be erased. Thus, the key data can be protected from being leaked to the external. Hence, the illegal copy can be protected more powerfully.

In the configuration of the fourth modification, assuming that the information reproducing apparatus S is an external memory of a host computer and that it is necessary to transmit the key data from the information reproducing apparatus to the host computer for example, the key data is included within the identification information 35. so that it is judged by the information reproducing apparatus S servicing as the external memory whether or not the data within the DVD 50 is illegally copied. Only if the data is not illegally copied, the key data is encoded and transmitted to the host computer. Thus, the illegally copied data is put into the host computer. Accordingly, for example, the host computer can be protected from being infected with a computer virus and the like.

Moreover, the case in which the present invention is applied to the data recorded on the DVD 50 is explained in the above described embodiments and modifications. In addition, the present invention can be applied to all the cases in which the ECC block is used to execute the error correction of the data.

More actually, the present invention can be applied to a case described below. For example, after the generation of the data including the ECC block 30', the data is transmitted through a telephone line. Then, the data is reproduced if it is confirmed by the transmitted destination that the data is not illegally copied.

In addition, the present invention can be applied to an information recording and reproducing operation which uses an MD (Mini Disc), a DAT (Digital Audio Tape) or a DVD-R (DVD-Recordable) or a data transmission by means of a CATV (Cable Television), similarly to the above mentioned cases.

Furthermore, the present invention can be used along with the conventionally proposed technique for protecting the illegal copy. For example, the key data to solve the scramble of the video information and the like is recorded as record information, and further the identification information 35 is recorded in accordance with the present invention. Accordingly, it is possible to expect an effect of dually protecting the illegal copy.

Now, more actually, an example is explained in which the present invention is used along with the conventionally proposed technique for protecting the illegal copy.

At first, a conventional technique is briefly explained which is used to protect the illegal copy in combination with the identification information 35 of the present invention. In the conventional technique, a particular identification information (which is in a sense similar to the identification information 35 in the present invention, and is conventionally referred to as a "water mark") is inserted into a portion which is not important to a human visuality or audibility on a stream of the data constituted by the video information and the like (for example, an area of a high frequency of the video information).

As a configuration of the combination of the identification information in the conventional technique and the identification information in the present invention, actually, CGMS (Copy Generation Management System) data (which is data indicative of an allowance or a rejection of a copy or a time shift record (its content is described later.)) for the identification information in the conventional technique is recorded on a data area, and on the other hand, CM (Compliance Mark) data (which is admission data, namely, identification information indicating that it is not illegally copied) for the identification information 35 of the present invention is recorded on a portion where the ECC-INNER code 31 and the ECC-OUTER code 32 overlap to each other.

Now, in one concrete example described below, the CGMS data and the CM data are defined as following.

CGMS Data : 00 → Allowance of Copy

CGMS Data : 01 → Allowance of Time Shift Record

CGMS Data : 11 → Rejection of Copy

CM Data: 11 → Admitted (Not Illegally Copied)

CM Data: ‡‡ → Not Admitted (Illegally Copied)

Incidentally, in this definition, "10" is not defined for the CGMS data, and "‡‡" in the CM data represents all the data except "11".

The time shift record indicates that a broadcast program is recorded for a reproduction. That is, the fact that an actual broadcast time is different from a time when the broadcast program is really viewed is referred to as a "time shift". Thus, "01" as the CGMS data implies a case in which the video information and the like are obtained, for example, by a reception of a satellite broadcast, and that it is added only when the recorded broadcast program is allowed to be reproduced in future.

Incidentally, if the video information and the like are sent from the above mentioned optical disc 50, only one of "00" and "11" is added as the CGMS data.

As mentioned above, the video information and the like are scrambled by using the key data, and are then recorded on the optical disc or transmitted. Thus, at this time, the CGMS data which is the part of the video information is also scrambled and is recorded or transmitted.

Then, the information reproducing apparatus for reproducing the optical disc 50 or a satellite broadcast receiver for receiving the satellite broadcast (hereafter, referred to as an IRD (Integrated Receiver Decoder)) uses the key data and de-scrambles the video information and the like, and further demodulates to output it as the analog video signal. The CGMS data is also included in this analog video signal.

The actual example of protecting the illegal copy by using the identification information 35 in the present invention and the identification information in the conventional technique in combination will be explained below for a case in which the video information and the like are sent from the optical disc and for a case in which the video information and the like are sent from the IRD, with the above explanations as a premise.

(A) Case of Video Information Sent from Optical Disc

In a case that the video information and the like are sent from the optical disc, devices contained in a system for protecting the illegal copy are as followings.

That is, the device for reproducing the video information and the like includes (i) a player which reproduces an optical disc to output an analog video signal, and (ii) a driver which if the video information and the like recorded on the optical disc are computer data, reproduces the optical disc to output digital data to the computer.

The device for recording the reproduced video information and the like includes (i) a recorder which records thereon the analog video signal outputted by the player and (ii) a writer which records thereon the digital data outputted by the driver.

The player has a decoder IC (Integrated Circuit) for de-scrambling and decoding the video information and the like. The key data for the de-scramble is stored in the decoder IC, which is sent to a manufacturer of the player by a supplier of the optical disc under a severe management. At this time, since the decoder IC itself is made into an IC, the key data cannot be obtained from the external. Hence, a substantially illegal player cannot be manufactured.

As for the driver, the driver is considered as a periphery device of a computer. The driver transfers the video information before the de-scramble (the video information reproduced from the optical disc) to a video input board provided in the computer (which has the components similar to those of the decoder IC in the player, and then de-scrambles and decodes the digital data outputted by the driver). At this time, the driver admitted to be not illegal by the supplier of the video information sends and receives an admission code (i. e.. a code data to confirm whether or not both of the driver and the video input board are admitted to be not illegal) to and from the video input board before transferring the digital data to the video input board. The sending and receiving operation of the data is executed only if both of them are admitted. Thus, if any one of the driver and the video input board is not admitted to be not illegal, the sending and receiving operation of the admission code cannot be executed, so that the sending and receiving operation of the digital data cannot be executed either.

On the other hand, in contrast with the above mentioned player or driver, as for the recorder and the writer, there is one case that the recorder or wri ter is admitted to be not illegal, and there is another case that the admission is not given to the recorder or writer (namely, which is considered to be illegal). Next, the protections of the illegal copy will be explained for these respective cases.

(A-1) Case That Admitted Recorder Records Video information From Player

At first, the admitted recorder sends and receives the admission code to and from the player, and thereby the admitted recorder and the player mutually confirm that they are not illegal. After the confirmation, the admitted recorder extracts the CGMS data from the inputted analog video signal, and starts to record the analog video signal only if the CGMS data is "00". Now, since the players are all admitted to be not illegal, the recorder admitted to be not illegal newly re-adds "11" as the CM data to the analog video signal outputted from the player (wherein, in the analog video signal, the CM data is erased in accordance with the configuration of the present invention) and records it. Hence, the CGMS data is always "00" and the CM data is always "11", in the video information to be recorded by the admitted recorder.

(A-2) Case That Non-Admitted Recorder Records Video information From Player

Even if a non-admitted recorder is connected to the player, the admission code is firstly sent and received between them. Usually, the admission code cannot be sent and received between them at this stage, resulting in that the player stops the output of the analog video signal to thereby protect the data from being illegally copied.

If any reason causes the player to erroneously recognize that the non-admitted recorder is admitted, the analog video signal is outputted to the recorder and is recorded thereon. However, the non-admitted recorder cannot re-record the CM data as "11" newly in this case. As a result, the CM data in the video information recorded by the recorder becomes the above mentioned "‡‡". Thus, the video information cannot be reproduced by the other players in accordance with the present invention. Hence, it is possible to protect the reproduction of the illegally copied video information.

(A-3) Case That Admitted Driver Reproduces Optical Disc

If the admitted driver reproduces the optical disc, a transmission destination of the reproduced digital data may be considered as the following three destinations:

    ① an admitted video input board:
    ② an admitted writer: and
    ③ a non-admitted writer.

If the reproduced digital data is transferred to the ③ non-admitted writer among the destinations, the sending and receiving of the admission code to be executed at the initial stage cannot be performed. Thus, the driver can recognize that the writer is not admitted. Accordingly, the digital data is not transferred. This results in the protection of the illegal copy.

If the reproduced digital data is transferred to the ① admitted video input board, the sending and receiving operation of the admission code is firstly executed. After that, the video input board receives the digital data from the driver. Only if the CM data in the digital data is "11", it is de-scrambled, decoded and is then outputted to external devices (e.g., a computer having the video input board).

0f course, the digital data is not sent by the driver, if it is confirmed that the video input board is illegal and is not admitted when the sending and receiving operation of the admission code is firstly executed.

Moreover, if the reproduced digital data is transferred to the ② admitted writer, the process is performed similarly to the above mentioned case that the admitted recorder records the video information from the player. Only the video information in which the CGMS data is "00" and the CM data is "11" is recorded.

(A-4) Case That Non-Admitted Driver Reproduces Optical Disc

In this case, the initial sending and receiving operation of the admission code prevents the digital data from being outputted to the admitted video input board and the admitted writer (it is implemented such that the video input board or the writer rejects the input of the digital data from the non-admitted driver). After all, the destination to which the digital data is transferred is only the non-admitted writer. If the non-admitted writer records the digital data, the CM data becomes "‡‡". Thus, the player and the video input board recognize that the data recorded by the writer is illegally copied and thereby do not reproduce it.

As in the above mentioned explanations of the respective cases, the CGMS data is inserted into the video information, and further the CM data is inserted into the ECC code area. Therefore, it is possible to substantially exclude the illegally copied optical disc.

(B) Case of Video information Sent From Satellite Broadcast

If the IRD for receiving and decoding the satellite broadcast is combined with the admitted recorder, the sending and receiving operation of the admission code is firstly performed between the IRD and the recorder. Then, the IRD and the admitted recorder mutually confirm that they are not illegal.

Here, in the video information sent from the satellite broadcast, the CGMS data is any one of "01" and "11". If the CGMS data is not inserted, the CGMS data is "01". That is, if the time shift record is allowed, the illegal copy is made over and over again from the data which has been once copied.

In the recorder which broadcasts the combination of the CGMS data and the CM data as the satellite broadcast and receives it by means of the IRD and then records it, the recorder and the IRD mutually execute the admitting process. Then, the CGMS data is set to "01" if the supplier of the video information is the IRD, and further the CM data set to "11" is added to the video information, and recorded on the optical disc or a video tape. In this case, it is possible to perform the time shift record from the optical disc or the video data after that.

On the other hand, if the recorder judges that the suppl ier of the video information is not the IRD but the player as the result of the mutual admissions (that is, if the data once recorded on the optical disc is being reproduced by the player after the reception of the satellite broadcast), it is judged whether the CGMS data in the video information is "01" or "00". If the CGMS data is "01", this implies that the data once recorded on the optical disc is again copied. Thus, the CM data is recorded as "**". Accordingly, since the CM data is "‡‡". the data is not reproduced by the player and the like after that. Hence, it is possible to protect the copy and the reproduction in multiple stages. Incidentally, the method in which even if the recording operation of the recorder is allowed, the reproduction thereof is not allowed uses up the optical disc as compared with the case in which the recording operation itself of the recorder is not allowed. Therefore, this method is effective in protecting against the illegal copy.

(C) Another Actual Example

As another actual example, it is possible to implement the present invention so as to record the admission data (i.e., the admission data indicating that it is not illegally copied) as the sub-identification information similar to the CM data within the video information area, in addition to the identification information (i.e., the above mentioned CGMS) inserted into the video information area of the optical disc and further record the CM data in the ECC code area.

At this time, a CM data N and an admission data M inserted into the video information area are added so as to have a relation of M = f(N) by using a predetermined function f. This results in a further improvement of the effect of protecting against the illegal copy.

That is, the video information is not reproduced if there is not the above mentioned relation between the detected admission data M and CM data N, when the video information is reproduced. Since the function f is set as mentioned above, even if any one of the CM data N and the admission data M is illegally obtained by any method, the other data cannot be obtained from the one obtained data, unless the function f is obtained. Thus, it is possible to protect the reproduction of the illegally copied video information. Moreover, if the admission data M is changed and recorded on the basis of the CM data N and the function f for each ECC block 30, it is possible to protect the CM data N and the admission data M themselves from being leaked to the external. That is, since the CM data N and the admission data M can be randomly changed, it is further difficult to specify the regularity as compared with the case of recording only the fixed CM data N. Accordingly, it is possible to protect against the illegal copy.

In the above mentioned actual example, the case is described in which the CGMS data is inserted into the video information area. In addition, if the video information is data of an MPEG (Moving Picture Expert Group) type, the identification data for each picture, namely, the data indicating any one of an I (Intra-coded) picture, a P (Predictive-coded) picture and a B (Bidirectionally Predictive-coded) picture may be inserted into the video information area as the identification information.

In this case, the admitted recorder can make the kind of the original image coincident wi th the kind of the picture to thereby perform an accurate recording operation at a time of encoding for the recording operation.

On the other hand, the video information recorded by the non-admitted recorder is recorded in such a condition that the identification of the kind of each picture and the correlation with the original image are not adequately established. Thus, if the player detects that the identification and the correlation are not adequately established, the illegal copy can be detected.

**EP 0 901 122 B1**

**Claims**

1. An information generating method of generating output information to be outputted, wherein said information generating method comprises the processes of:

    adding an error correction code (31, 32), which is used for an error correction of the output information when the output information is outputted, to the output information to thereby generate the output information having the error correction code, and which comprises an inner code inspection symbol (31) for correcting the output information and an outer code inspection symbol (32) for correcting the output information and said inner code inspection symbol (31); and
    replacing a part of the error correction code located at a portion which contains said outer code inspection symbol (32) added to said inner code inspection symbol (31), with a rearranged error correction code, which is obtained by shifting an array of the data of said part of the error correction code within the array of the data by the number corresponding to the value of the identification information (35) indicating that the output information to be outputted is not illegally copied to thereby generate partially replaced output information.

2. An information record medium (SP, 50) on and from which record information is recorded and reproduced, comprising:

    an error correction code (31, 32) recorded on said information record medium by adding the error correction code, which is used for an error correction of the record information when the record information is reproduced, to the record information to thereby generate the record information having the error correction code, and which comprises an inner code inspection symbol (31) for correcting the output information and an outer code inspection symbol (32) for correcting the output information and said inner code inspection symbol (31); and
    identification information (35) recorded on said information record medium by replacing a part of the error correction code located at a portion which-contains said outer code inspection symbol (32) added to said inner code inspection symbol (31), with a rearranged error correction code, which is obtained by shifting an array of the data of said part of the error correction code within the array of the data by the number corresponding to the value of the identification information indicating that the record information to be reproduced is not illegally copied to thereby generate partially replaced record information.

3. An information reproducing method of reproducing record information from an information record medium (50), said information record medium comprising:

    an error correction code (31, 32) recorded on said information record medium by adding the error correction code, which is used for an error correction of the record information when the record information is reproduced, to the record information to thereby generate the record information having the error correction code, and which comprises an inner code inspection symbol (31) for correcting the output information and an outer code inspection symbol (32) for correcting the output information and said inner code inspection symbol (31); and
    identification information (35) recorded on said information record medium by replacing a part of the error correction code located at a portion which contains said outer code inspection symbol (32) added to said inner code inspection symbol (31), with a rearranged error correction code, which is obtained by shifting an array of the data of said part of the error correction code within the array of the data by the number corresponding to the value of the identification information indicating that the record information to be reproduced is not illegally copied to thereby generate partially replaced record information,

    **characterized in that** said information reproducing method comprises the processes of:

    detecting the partially replaced record information from said information record medium;
    extracting the rearranged error correction code of the identification information from the partially replaced record information detected by said detecting process;
    judging whether or not the identification information can be obtained by calculating shifted number necessary to obtain the array of the data of the inspection symbol (32) before rearranging from the rearranged error correction code extracted by said extracting process; and
    reproducing the record information by applying the error correction to the partially replaced record information, which is detected by said detecting process, by use of the error correction code only if the identification information is judged to be extracted by said judging process.

4. An information generating apparatus (C) for generating output information to be outputted, wherein said information generating apparatus comprises:

an error correcting code adding device (2) for adding an error correction code (31, 32), which is used for an error correction of the output information when the output information is outputted, to the output information to thereby generate the output information having the error correction code, and which comprises an inner code inspection symbol (31) for correcting the output information and an outer code inspection symbol (32) for correcting the output information and said inner code inspection symbol (31); and
a replacing device (3) for replacing a part of the error correction code, which is generated by said error correcting code adding device located at a portion which contains said outer code inspection symbol (32) added to said inner code inspection symbol (31), with a rearranged error correction code, which is obtained by shifting an array of the data of said part of the error correction code within the array of the data by the number corresponding to the value of the identification information (35) indicating that the output information to be outputted is not illegally copied to thereby generate partially replaced output information.

**5.** An information reproducing apparatus (S) for reproducing record information from an information record medium (50), said information record medium comprising:

an error correction code (31, 32) recorded on said information record medium by adding the error correction code, which is used for an error correction of the record information when the record information is reproduced, to the record information to thereby generate the record information having the error correction code, and which comprises an inner code inspection symbol (31) for correcting the output information and an outer code inspection symbol (32) for correcting the output information and said inner code inspection symbol (31); and
identification information (35) recorded on said information record medium by replacing a part of the error correction code located at a portion which contains said outer code inspection symbol (32) added to said inner code inspection symbol (31), with a rearranged error correction code, which is obtained by shifting an array of the data of said part of the error correction code within the array of the data by the number corresponding to the value of the identification information indicating that the record information to be reproduced is not illegally copied to thereby generate partially replaced record information,

**characterized in that** said information reproducing apparatus comprises:

a detecting device (51, 52) for detecting the partially replaced record information from said information record medium;
an extracting device (65) for extracting the rearranged error correction code of the identification information from the partially replaced record information detected by said detecting device;
a judging device (58) for judging whether or not the identification information can be obtained by calculating shifted number necessary to obtain the array of the data of the inspection symbol (32) before rearranging from the rearranged error correction code extracted by said extracting device; and
a reproducing device (56, 57, 64) for reproducing the record information by applying the error correction to the partially replaced record information, which is detected by said detecting device, by use of the error correction code only if the identification information is judged to be extracted by said judging device.

**Patentansprüche**

**1.** Informationserzeugungsverfahren zum Erzeugen von auszugebenden Ausgabeinformationen, wobei das Informationserzeugungsverfahren die folgenden Schritte umfasst:

Hinzufügen eines Fehlerkorrektur-Codes (31, 32), welcher zur Fehlerkorrektur der Ausgabeinformationen bei der Ausgabe der Ausgabeinformationen verwendet wird, zu den Ausgabeinformationen, um somit Ausgabeinformationen mit dem Fehlerkorrektur-Code zu erzeugen, und welcher ein Inner-Code-Inspektionssymbol (31) zum Korrigieren der Ausgabeinformationen und ein Outer-Code-Inspektionssymbol (32) zum Korrigieren der Ausgabeinformationen und des Inner-Code-Inspektionssymbols (31) umfasst; und
Ersetzen eines Teils des Fehlerkorrektur-Codes, der sich in einem Abschnitt befindet, der das zum Inner-Code-Inspektionssymbols (31) hinzugefügte Outer-Code-Inspektionssymbol (32) beinhaltet, durch einen umgeordneten Fehlerkorrektur-Code, der **dadurch** erhalten wird, dass ein Array von Daten dieses Teils des Fehlerkorrektur-Codes innerhalb des Arrays von Daten um eine Zahl verschoben wird, die dem Wert der Identifikations-Information (35) entspricht, die anzeigt, dass die auszugebenden Ausgabeinformationen nicht illegal kopiert wurden, um somit teilweise ersetzte Ausgabeinformationen zu erzeugen.

2. Informationsaufzeichnungsmedium (SP, 50) auf und von welchem Aufzeichnungsinformationen aufgezeichnet bzw. wiedergegeben werden, mit:

einem Fehlerkorrektur-Code (31, 32), welcher auf dem Informationsaufzeichnungsmedium aufzeichnet wird, indem der Fehlerkorrektur-Code, welcher zur Fehlerkorrektur der Aufzeichnungsinformationen bei der Wiedergabe der Aufzeichnungsinformationen verwendet wird, zu den Aufzeichnungsinformationen hinzugefügt wird, um somit Aufzeichnungsinformationen mit dem Fehlerkorrektur-Code zu erzeugen, und welcher ein Inner-Code-Inspektionssymbol (31) zum Korrigieren der Ausgabeinformationen und ein Outer-Code-Inspektionssymbol (32) zum Korrigieren der Ausgabeinformationen und des Inner-Code-Inspektionssymbols (31) umfasst; und eine Identifikations-Information (35), die auf dem Informationsaufzeichnungsmedium aufgezeichnet ist, indem ein Teil des Fehlerkorrektur-Codes, der sich in einem Abschnitt befindet, der das zum Inner-Code-Inspektionssymbols (31) hinzugefügte Outer-Code-Inspektionssymbol (32) beinhaltet, durch einen umgeordneten Fehlerkorrektur-Code ersetzt wird, der **dadurch** erhalten wird, dass ein Array von Daten dieses Teils des Fehlerkorrektur-Codes innerhalb des Arrays von Daten um eine Zahl verschoben wird, die dem Wert der Identifikations-Infonnation entspricht, die anzeigt, dass die wiederzugebenden Aufzeichnungsinformationen nicht illegal kopiert wurden, um somit teilweise ersetzte Aufzeichnungsinformationen zu erzeugen.

3. Informationswiedergabeverfahren zur Wiedergabe von Aufzeichnungsinformationen von einem Informationsaufzeichnungsmedium (50), wobei das Informationsaufzeichnungsmedium umfasst:

einen Fehlerkorrektur-Code (31, 32), welcher auf dem Informationsaufzeichnungsmedium aufzeichnet wird, indem der Fehlerkorrektur-Code welcher zur Fehlerkorrektur der Aufzeichnungsinformationen bei der Wiedergabe der Aufzeichnungsinformationen verwendet wird, zu den Aufzeichnungsinformationen hinzugefügt wird, um somit Aufzeichnungsinformationen mit dem Fehlerkorrektur-Code zu erzeugen, und welcher ein Inner-Code-Inspektionssymbol (31) zum Korrigieren der Ausgabeinformationen und ein Outer-Code-Inspektionssymbol (32) zum Korrigieren der Ausgabeinformationen und des Inner-Code-Inspektionssymbols (31) umfasst; und Identifikations-Informationen (35), die auf dem Informationsaufzeichnungsmedium aufgezeichnet sind, indem ein Teil des Fehlerkorrektur-Codes, der sich in einem Abschnitt befindet, der das zum Inner-Code-Inspektionssymbols (31) hinzugefügte Outer-Code-Inspektionssymbol (32) beinhaltet, durch einen umgeordneten Fehlerkorrektur-Code ersetzt wird, der **dadurch** erhalten wird, dass ein Array von Daten dieses Teils des Fehlerkorrektur-Codes innerhalb des Arrays von Daten um eine Zahl verschoben wird, die dem Wert der Identifikations-Information entspricht, die anzeigt, dass die wiederzugebenden Aufzeichnungsinformationen nicht illegal kopiert wurden, um somit teilweise ersetzte Aufzeichnungsinformationen zu erzeugen,

**dadurch gekennzeichnet, dass** das Informationswiedergabeverfahren folgende Schritte umfasst:

Detektieren der teilweise ersetzten Aufzeichnungsinformationen vom Informationsaufzeichnungsmedium; Extrahieren des umgeordneten Fehlerkorrektur-Codes der Identifikations-Informationen aus den im Detektierschritt detektierten teilweise ersetzten Aufzeichnungsinformationen; Entscheiden, ob die Identifikations-Informationen erhalten werden können, indem eine Versatz-Zahl berechnet wird, die notwendig ist, um den Array der Daten des Inspektionssymbols (32) vor dem Umordnen, aus dem umgeordneten Fehlerkorrektur-Code, der im Extrahierschritte extrahiert wurde, zu erhalten; und Wiedergabe der Aufzeichnungsinformationen durch Anwendung der Fehlerkorrektur auf die teilweise ersetzten Aufzeichnungsinformationen, welche im Detektierschritt detektiert wurden, bei Verwendung des Fehlerkorrektur-Codes lediglich in dem Fall, dass im Entscheidungsschritt entschieden wurde, dass die Identifikations-Informationen extrahiert sind.

4. Informationserzeugungsvorrichtung (C) zum Erzeugen von auszugebenden Ausgabeinformationen, wobei die Informationserzeugungsvorrichtung umfasst:

eine Fehlerkorrektur-Code-Hinzufügungsvorrichtung (2) zum Hinzufügen von Fehlerkorrektur-Code (31, 32), welcher zur Fehlerkorrektur der Ausgabeinformationen bei der Ausgabe der Ausgabeinformationen verwendet wird, zu den Ausgabeinformationen, um somit Ausgabeinformationen mit dem Fehlerkorrektur-Code zu erzeugen, und welcher ein Inner-Code-Inspektionssymbol (31) zum Korrigieren der Ausgabeinformationen und ein Outer-Code-Inspektionssymbol (32) zum Korrigieren der Ausgabeinformationen und des Inner-Code-Inspektionssymbols (31) umfasst; und

eine Ersetzungsvorrichtung (3) zum Ersetzen eines Teils des Fehlerkorrektur-Codes, der von der Fehlerkorrektur-Code-Hinzufügungsvorrichtung (2) erzeugt wird, und der sich in einem Abschnitt befindet, der das zum Inner-Code-Inspektionssymbols (31) hinzugefügte Outer-Code-Inspektionssymbol (32) beinhaltet, durch einen umgeordneten Fehlerkorrektur-Code, der **dadurch** erhalten wird, dass ein Array von Daten dieses Teils des Fehlerkorrektur-Codes innerhalb des Arrays von Daten um eine Zahl verschoben wird, die dem Wert der Identifikations-Information (35) entspricht, die anzeigt, dass die auszugebenden Ausgabeinformationen nicht illegal kopiert wurden, um somit teilweise ersetzte Ausgabeinformationen zu erzeugen.

5.  Informationswiedergabevorrichtung (S) zur Wiedergabe von Aufzeichnungsinformationen von einem Informationsaufzeichnungsmedium (50), wobei das Informationsaufzeichnungsmedium umfasst:

einen Fehlerkorrektur-Code (31, 32), welcher auf dem Informationsaufzeichnungsmedium aufzeichnet wird, indem der Fehlerkorrektur-Code welcher zur Fehlerkorrektur der Aufzeichnungsinformationen bei der Wiedergabe der Aufzeichnungsinformationen verwendet wird, zu den Aufzeichnungsinformationen hinzugefügt wird, um somit Aufzeichnungsinformationen mit dem Fehlerkorrektur-Code zu erzeugen, und welcher ein Inner-Code-Inspektionssymbol (31) zum Korrigieren der Ausgabeinformationen und ein Outer-Code-Inspektionssymbol (32) zum Korrigieren der Ausgabeinformationen und des Inner-Code-Inspektionssymbols (31) umfasst; und Identifikations-Informationen (35), die auf dem Informationsaufzeichnungsmedium aufgezeichnet sind, indem ein Teil des Fehlerkorrektur-Codes, der sich in einem Abschnitt befindet, der das zum Inner-Code-Inspektionssymbols (31) hinzugefügte Outer-Code-Inspektionssymbol (32) beinhaltet, durch einen umgeordneten Fehlerkorrektur-Code ersetzt wird, der **dadurch** erhalten wird, dass ein Array von Daten dieses Teils des Fehlerkorrektur-Codes innerhalb des Arrays von Daten um eine Zahl verschoben wird, die dem Wert der Identifikations-Infonnation entspricht, die anzeigt, dass die wiederzugebenden Aufzeichnungsinformationen nicht illegal kopiert wurden, um somit teilweise ersetzte Aufzeichnungsinformationen zu erzeugen,

**dadurch gekennzeichnet, dass** die Informationswiedergabevorrichtung umfasst:

eine Detektionsvorrichtung (51, 52) zum Detektieren der teilweise ersetzten Aufzeichnungsinformationen vom Informationsaufzeichnungsmedium;
eine Extrahierungsvorrichtung (65) zum Extrahieren des umgeordneten Fehlerkorrektur-Codes der Identifikations-Informationen aus den mit der Detektionsvorrichtung detektierten teilweise ersetzten Aufzeichnungsinformationen;
eine Entscheidungsvorrichtung (58) zum Entscheiden, ob die Identifikations-Informationen erhalten werden können, indem eine Versatz-Zahl berechnet wird, die notwendig ist, um den Array der Daten des Inspektionssymbols (32) vor dem Umordnen, aus dem umgeordneten Fehlerkorrektur-Code, der von der Extrahierungsvorrichtung extrahiert wurde, zu erhalten; und
eine Wiedergabevorrichtung (56, 57, 64) zur Wiedergabe der Aufzeichnungsinformationen durch Anwendung der Fehlerkorrektur auf die teilweise ersetzten Aufzeichnungsinformationen, welche von der Detektionsvorrichtung detektiert wurden, bei Verwendung des Fehlerkorrektur-Codes lediglich in dem Fall, dass von der Entscheidungsvorrichtung entschieden wurde, dass die Identifikations-Informationen extrahiert sind.

## Revendications

1.  Procédé de génération d'informations permettant de générer des informations de sortie à délivrer en sortie, dans lequel ledit procédé de génération d'informations comprend les processus consistant à :

ajouter un code de correction d'erreur (31, 32), qui est utilisé en vue d'une correction d'erreur des informations de sortie lorsque les informations de sortie sont délivrées en sortie, aux informations de sortie, afin de générer ainsi les informations de sortie comportant le code de correction d'erreur, et qui comprend un symbole d'inspection de code interne (31) destiné à corriger les informations de sortie et un symbole d'inspection de code externe (32) destiné à corriger les informations de sortie et ledit symbole d'inspection de code interne (31) ; et remplacer une partie du code de correction d'erreur situé au niveau d'une partie qui contient ledit symbole d'inspection de code externe (32) ajouté audit symbole d'inspection de code interne (31), avec un code de correction d'erreur réagencé, qui est obtenu en décalant un champ de données de ladite partie du code de correction d'erreur dans le champ de données selon la quantité correspondant à la valeur des informations d'identification (35) indiquant que les informations de sortie à délivrer en sortie ne sont pas illégalement copiées, afin de générer ainsi des informations de sortie partiellement remplacées.

**2.** Milieu d'enregistrement d'informations (SP, 50) sur lequel et à partir duquel des informations d'enregistrement sont enregistrées et reproduites, comprenant :

un code de correction d'erreur (31, 32) enregistré sur ledit milieu d'enregistrement d'informations en ajoutant le code de correction d'erreur, qui est utilisé pour une correction d'erreur des informations d'enregistrement lorsque les informations d'enregistrement sont reproduites, aux informations d'enregistrement, afin de générer ainsi les informations d'enregistrement comportant le code de correction d'erreur, et qui comprend un symbole d'inspection de code interne (31) destiné à corriger les informations de sortie et un symbole d'inspection de code externe (32) destiné à corriger les informations de sortie et ledit symbole d'inspection de code interne (31) ; et

des informations d'identification (35) enregistrées sur ledit milieu d'enregistrement d'informations en remplaçant une partie du code de correction d'erreur situé au niveau d'une partie qui contient ledit symbole d'inspection de code externe (32) ajouté audit symbole d'inspection de code interne (31), avec un code de correction d'erreur réagencé, qui est obtenu en décalant un champ de données de ladite partie du code de correction d'erreur dans le champ de données selon le nombre correspondant à la valeur des informations d'identification indiquant que les informations d'enregistrement à reproduire ne sont pas illégalement copiées, afin de générer ainsi des informations d'enregistrement partiellement remplacées.

**3.** Procédé de reproduction d'informations permettant de reproduire des informations d'enregistrement à partir d'un milieu d'enregistrement d'informations (50), ledit milieu d'enregistrement d'informations comprenant :

un code de correction d'erreur (31, 32) enregistré sur ledit milieu d'enregistrement d'informations en ajoutant le code de correction d'erreur, qui est utilisé pour une correction d'erreur des informations d'enregistrement lorsque les informations d'enregistrement sont reproduites, aux informations d'enregistrement, afin de générer ainsi les informations d'enregistrement comportant le code de correction d'erreur, et qui comprend un symbole d'inspection de code interne (31) destiné à corriger les informations de sortie et un symbole d'inspection de code externe (32) destiné à corriger les informations de sortie et ledit symbole d'inspection de code interne (31) ; et

des informations d'identification (35) enregistrées sur ledit milieu d'enregistrement d'informations en remplaçant une partie du code de correction d'erreur situé au niveau d'une partie qui contient ledit symbole d'inspection de code externe (32) ajouté audit symbole d'inspection de code interne (31), avec un code de correction d'erreur réagencé, qui est obtenu en décalant un champ de données de ladite partie du code de correction d'erreur dans le champ de données selon le nombre correspondant à la valeur des informations d'identification indiquant que les informations d'enregistrement à reproduire ne sont pas illégalement copiées, afin de générer ainsi des informations d'enregistrement partiellement remplacées,

**caractérisé en ce que** ledit procédé de reproduction d'informations comprend les processus consistant à :

détecter les informations d'enregistrement partiellement remplacées à partir dudit milieu d'enregistrement d'informations ;

extraire le code de correction d'erreur réagencé des informations d'identification à partir des informations d'enregistrement partiellement remplacées détectées par ledit processus de détection ;

déterminer si les informations d'identification peuvent ou non être obtenues en calculant une quantité de décalage nécessaire pour obtenir le champ de données du symbole d'inspection (32) avant le réagencement, à partir du code de correction d'erreur réagencé extrait par ledit processus d'extraction ; et

reproduire les informations d'enregistrement en appliquant la correction d'erreur aux informations d'enregistrement partiellement remplacées, qui sont détectées par ledit processus de détection, en utilisant le code de correction d'erreur uniquement si les informations d'identification sont déterminées comme devant être extraites par ledit processus de détermination.

**4.** Appareil de génération d'informations (C) destiné à générer des informations de sortie devant être délivrées en sortie, dans lequel ledit appareil de génération d'informations comprend :

un dispositif d'ajout de code de correction d'erreur (2) destiné à ajouter un code de correction d'erreur (31, 32) qui est utilisé pour une correction d'erreur des informations de sortie lorsque les informations de sortie sont délivrées en sortie, aux informations de sortie, afin de générer ainsi les informations de sortie possédant le code de correction d'erreur, et qui comprend un symbole d'inspection de code interne (31) destiné à corriger les informations de sortie et un symbole d'inspection de code externe (32) destiné à corriger les informations de sortie et ledit symbole d'inspection de code interne (31) ; et

un dispositif de remplacement (3) destiné à remplacer une partie du code de correction d'erreur, qui est généré par ledit dispositif d'ajout de code de correction d'erreur situé au niveau d'une partie qui contient ledit symbole d'inspection de code externe (32) ajouté audit symbole d'inspection de code interne (31), avec un code de correction d'erreur réagencé, qui est obtenu en décalant un champ de données de ladite partie du code de correction d'erreur dans le champ de données selon le nombre correspondant à la valeur des informations d'identification (35) indiquant que les informations de sortie à délivrer en sortie ne sont pas illégalement copiées, afin de générer ainsi des informations de sortie partiellement remplacées.

5. Appareil de reproduction d'informations (S) destiné à reproduire des informations d'enregistrement à partir d'un milieu d'enregistrement d'informations (50), ledit milieu d'enregistrement d'informations comprenant :

un code de correction d'erreur (31, 32) enregistré sur ledit milieu d'enregistrement d'informations en ajoutant le code de correction d'erreur, qui est utilisé pour une correction d'erreur des informations d'enregistrement lorsque les informations d'enregistrement sont reproduites, aux informations d'enregistrement, afin de générer ainsi les informations d'enregistrement comportant le code de correction d'erreur, et qui comprend un symbole d'inspection de code interne (31) destiné à corriger les informations de sortie et un symbole d'inspection de code externe (32) destiné à corriger les informations de sortie et ledit symbole d'inspection de code interne (31) ; et

des informations d'identification (35) enregistrées sur ledit milieu d'enregistrement d'informations en remplaçant une partie du code de correction d'erreur situé au niveau d'une partie qui contient ledit symbole d'inspection de code externe (32) ajouté audit symbole d'inspection de code interne (31), avec un code de correction d'erreur réagencé, qui est obtenu en décalant un champ de données de ladite partie du code de correction d'erreur dans le champ de données selon le nombre correspondant à la valeur des informations d'identification indiquant que les informations d'enregistrement à reproduire ne sont pas illégalement copiées, afin de générer ainsi des informations d'enregistrement partiellement remplacées,

**caractérisé en ce que** ledit appareil de reproduction d'informations comprend :

un dispositif de détection (51, 52) destiné à détecter les informations d'enregistrement partiellement remplacées à partir dudit milieu d'enregistrement d'informations ;

un dispositif d'extraction (65) destiné à extraire le code de correction d'erreur réagencé des informations d'identification à partir des informations d'enregistrement partiellement remplacées détectées par ledit appareil de détection ;

un dispositif de détermination (58) destiné à déterminer si les informations d'identification peuvent ou non être obtenues en calculant une quantité de décalage nécessaire pour obtenir le champ de données du symbole d'inspection (32) avant le réagencement, à partir du code de correction d'erreur réagencé extrait par ledit processus d'extraction ; et

un dispositif de reproduction (56, 57, 64) destiné à reproduire les informations d'enregistrement en appliquant la correction d'erreur aux informations d'enregistrement partiellement remplacées, qui sont détectées par ledit dispositif de détection, en utilisant le code de correction d'erreur uniquement si les informations d'identification sont déterminées comme devant être extraites par ledit dispositif de détermination.

# FIG. 1

EP 0 901 122 B1

# FIG. 2

```
        ┌──────────┐
        │  START   │
        └──────────┘
             │
             ▼
     ┌─────────────────┐
     │    ADD IEC      │──── S1
     └─────────────────┘
             │
             ▼
     ┌─────────────────┐
     │   GENERATE      │──── S2
     │  DATA SECTOR    │
     └─────────────────┘
             │
             ▼
     ┌─────────────────┐
     │    SCRAMBLE     │──── S3
     └─────────────────┘
             │
             ▼
     ┌─────────────────┐
     │   GENERATE      │──── S4
     │   ECC BLOCK     │
     └─────────────────┘
             │
             ▼
     ┌─────────────────┐
     │   WRITE         │
     │ IDENTIFICATION  │──── S5
     │ INFORATION      │
     └─────────────────┘
             │
             ▼
     ┌─────────────────┐
     │   INTERLEAVE    │──── S6
     └─────────────────┘
             │
             ▼
     ┌─────────────────┐
     │    8-16         │──── S7
     │  MODULATION     │
     └─────────────────┘
             │
             ▼
     ┌─────────────────┐
     │    RECORD       │──── S8
     └─────────────────┘
             │
             ▼
        ┌──────────┐
        │   END    │
        └──────────┘
```

**FIG. 3A**

DATA SECTOR (2064Byte)

ID | IEC | RSV | DATA | EDC

21  22  23        24        25

**FIG. 3B**

# FIG. 4

| | | | | | | | | |
|---|---|---|---|---|---|---|---|---|
| D0.0 | D0.1 | · · · | D0.170 | D0.171 | D0.172 | D0.173 | · · · | D0.181 |
| D1.0 | D1.1 | · · · | D1.170 | D1.171 | D1.172 | D1.173 | · · · | D1.181 |
| D2.0 | D2.1 | · · · | D2.170 | D2.171 | D2.172 | D2.173 | · · · | D2.181 |
| D3.0 | D3.1 | · · · | D3.170 | D3.171 | D3.172 | D3.173 | · · · | D3.181 |
| · | · | · | · | · | · | · | · | · |
| D190.0 | D190.1 | · · · | D190.170 | D190.171 | D190.172 | D190.173 | · · · | D190.181 |
| D191.0 | D191.1 | · · · | D191.170 | D191.171 | D191.172 | D191.173 | · · · | D191.181 |
| D192.0 | D192.1 | · · · | D192.170 | D192.171 | WMD 0 | D192.173 | · · · | D192.181 |
| · | · | · | · | · | WMD 1 | · | · | · |
| · | · | · | · | · | WMD 11 | · | · | · |
| D207.0 | D207.1 | · · · | D207.170 | D207.171 | D207.172 | D207.173 | · · · | D207.181 |

33    30′    31    34    32    35

192 LINES (12×16)

PO (16 LINES)

172Byte     PI(10Byte)

# FIG. 5

(DVD etc.)

(26 SYNC FRAMES = 1 RECORDING SECTOR)

EP 0 901 122 B1

# FIG. 6

EP 0 901 122 B1

# FIG. 7

スタート

DATA DETECTION ── S10

DE-INTERLEAVE ── S11

DATA DETECTION FROM PRETERMINED AREA ── S12

CONFIRM CONTENT ── S13

S14
IDENTIFICATION INFORATION? ── NO

YES

ECC DECODE ── S15

DE-SCRAMBLE REPRODUCTION ── S16

エンド